(19) **Europäisches Patentamt / European Patent Office / Office européen des brevets**

(11) **EP 4 462 667 B1**

(12) **FASCICULE DE BREVET EUROPEEN**

(45) Date de publication et mention
de la délivrance du brevet:
**08.04.2026 Bulletin 2026/15**

(21) Numéro de dépôt: **24175246.8**

(22) Date de dépôt: **10.05.2024**

(51) Classification Internationale des Brevets (IPC):
*H02M 3/00* (2006.01)   *H02M 3/22* (2006.01)
*H02M 3/28* (2006.01)   *H02M 1/00* (2006.01)
*H02M 3/335* (2006.01)

(52) Classification Coopérative des Brevets (CPC):
**H02M 3/33561; H02M 1/0058; H02M 3/33569;**
**H02M 3/33576; H02M 3/33584**

(54) **SYSTÈME DE RÉGULATION D'UN CONVERTISSEUR À MUTIPLES PONTS ACTIFS À ALIMENTATION HYDRIDE, PROCÉDÉ ET DISPOSITIF ASSOCIÉS**

REGELSYSTEM FÜR EINEN AKTIVEN BRÜCKENUMRICHTER MIT HYBRIDSTROMVERSORGUNG, VERFAHREN UND VORRICHTUNG DAFÜR

CONTROL SYSTEM FOR HYBRID-FED MULTI-ACTIVE BRIDGE CONVERTER, METHOD AND DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.05.2023 FR 2304696**

(43) Date de publication de la demande:
**13.11.2024 Bulletin 2024/46**

(73) Titulaires:
- **Commissariat à l'Energie Atomique et aux Energies Alternatives**
  **75015 Paris (FR)**
- **Université Grenoble Alpes**
  **38400 Saint-Martin-d'Hères (FR)**
- **Centre National de la Recherche Scientifique**
  **75016 Paris (FR)**
- **Institut Polytechnique de Grenoble**
  **38000 Grenoble (FR)**

(72) Inventeurs:
- **TARRAF, Rebecca**
  **38054 GRENOBLE CEDEX 9 (FR)**
- **FREY, David**
  **38400 SAINT MARTIN D'HERES (FR)**
- **LEIRENS, Sylvain**
  **38054 GRENOBLE CEDEX 9 (FR)**
- **CARCOUET, Sébastien**
  **38054 GRENOBLE CEDEX 9 (FR)**
- **MAYNARD, Xavier**
  **38054 GRENOBLE CEDEX 9 (FR)**

(74) Mandataire: **Lavoix**
**2, place d'Estienne d'Orves**
**75441 Paris Cedex 09 (FR)**

(56) Documents cités:
**US-A1- 2008 212 340     US-B1- 10 218 260**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

La présente invention concerne un système de régulation d'un convertisseur à multiples ponts actifs à alimentation hybride. L'invention se rapporte aussi à un procédé de régulation et un convertisseur associés.

**ARRIERE-PLAN TECHNOLOGIQUE DE L'INVENTION**

L'intégration de sources d'énergie renouvelable et de système de stockage d'énergie dans des applications de puissance électronique a généré un intérêt pour les convertisseurs multiports.

Une topologie spécifique de tels convertisseurs est celle de convertisseurs MAB, l'acronyme MAB renvoyant à la dénomination anglaise « Multi-Active Bridge » signifiant littéralement « Multiples ponts actifs ».

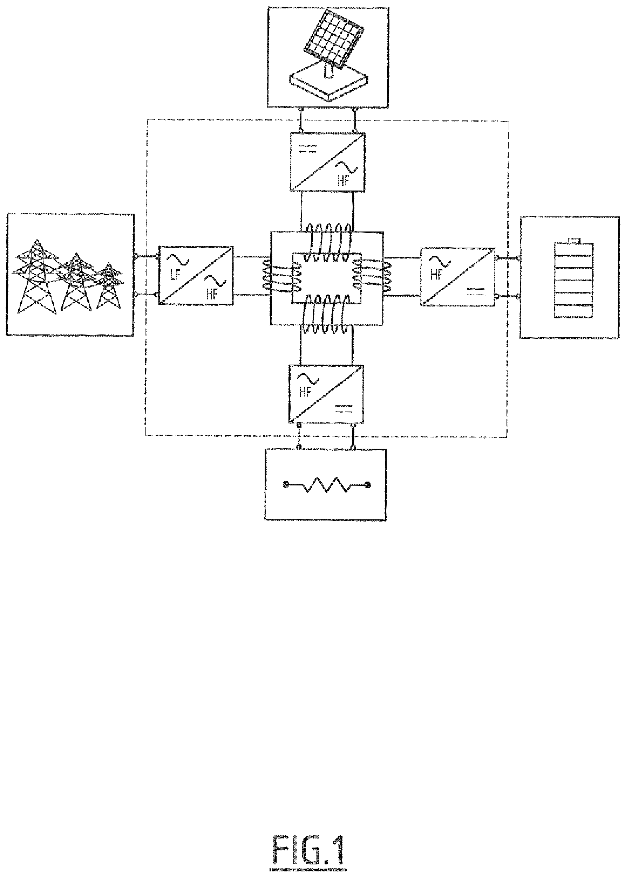

Un exemple d'utilisation d'un tel convertisseur est présenté sur la figure 1 où le convertisseur interagit avec le réseau, une batterie, une charge (résistance sur cette figure) et un panneau solaire.

Cela montre qu'une telle structure présente l'avantage que la production, la consommation et le stockage d'énergie électrique peuvent être réalisés en un seul lieu.

En outre, les convertisseurs MAB présentent une isolation galvanique intrinsèque du fait que le transformateur connecte les ports via des enroulements respectifs. Cet aspect est important pour permettre l'emploi des convertisseurs pour des sources d'énergie et de charge présentant des fortes différences.

Il est connu d'utiliser des convertisseurs MAB avec des ports de tension.

Toutefois, pour certaines utilisations et notamment pour des cas des panneaux photovoltaïques, il est souhaitable d'utiliser des ponts alimentés en courant mais cela conduit à un convertisseur à alimentation hybride dont le contrôle des surtensions est délicat.

Le document US 2008/212340 A1 enseigne que, pour convertir une première tension continue en une seconde tension continue, un premier circuit en pont compris dans un convertisseur de puissance est commandé pour convertir la première tension continue en une première tension alternative. La première tension alternative est transformée en au moins une deuxième tension alternative. Chaque deuxième tension alternative est convertie en tension continue par des circuits de pont respectifs. Pour augmenter l'efficacité du convertisseur de puissance, les commutateurs du convertisseur de puissance sont contrôlés pour fonctionner en commutation à pertes réduites. Le rapport cyclique de chaque tension alternative est ainsi contrôlé. Dans un mode de réalisation, le circuit est régulé pour que la valeur d'une intégrale temporelle de la tension sur un demi-cycle de chaque tension alternative soit sensiblement égale.

**RESUME DE L'INVENTION**

Il existe donc un besoin pour un système de régulation d'un convertisseur à multiples ponts actifs à alimentation hybride permettant d'assurer un bon fonctionnement du convertisseur.

A cet effet, la description décrit un système de régulation d'un convertisseur à multiples ponts actifs à alimentation hybride, le convertisseur à multiples ponts actifs comprenant :

- un port de courant d'entrée comprenant un pont de commutateurs en H pour lequel un commutateur de référence est défini, le commutateur de référence étant dit premier commutateur de référence et étant commandé par une première loi de commande, la première loi de commande présentant un premier rapport cyclique,
- au moins un port de tension de sortie comprenant un pont de commutateurs en H pour lequel un commutateur de référence est défini, chaque commutateur de référence étant dit deuxième commutateur de référence et étant commandé par une deuxième loi de commande respective, chaque deuxième loi de commande présentant un deuxième rapport cyclique prédéfini et un déphasage par rapport à la première loi de commande,
- un transformateur présentant des enroulements, chaque enroulement étant relié à un port par une interface d'isolation respective,

le système de régulation étant propre à réguler le convertisseur à multiples ponts actifs à une consigne, la consigne comprenant une valeur de courant de consigne pour le courant du port de courant et au moins une valeur de tension de consigne pour un port de tension, le système de régulation comprenant :

- une unité de mesure de valeurs mesurées, les valeurs mesurées comprenant le courant du port de courant et la tension de chaque port de tension,
- une première unité de commande du premier commutateur de référence, la première unité de commande comprenant :

- une première sous-unité de calcul d'une première valeur initiale souhaitée, la première valeur initiale souhaitée étant une valeur souhaitée pour le premier rapport cyclique égale à la somme du résultat d'une première fonction de calcul appliquée aux valeurs de consigne et d'une marge de sécurité,
- une première sous-unité de détermination de l'écart entre la valeur de courant mesurée et la valeur de courant de consigne, pour obtenir un écart de courant déterminé,
- une première sous-unité de correction propre à convertir l'écart de courant déterminé en une première valeur correctrice pour le premier rapport cyclique par application d'une première fonction de conversion,
- une première sous-unité d'addition de la première valeur initiale souhaitée et de la première valeur correctrice, pour obtenir une première valeur candidate,
- une première sous-unité d'ajustement propre à ajuster la première valeur candidate pour obtenir une première valeur à appliquer comprise entre deux première valeurs extrêmes, la première valeur extrême la plus basse étant le résultat de la première fonction de calcul appliquée aux valeurs mesurées,
- une première sous-unité d'application de la première loi de commande ayant comme rapport cyclique la première valeur à appliquer, et

- pour chaque port de tension ayant une valeur de tension de consigne, une deuxième unité de commande du deuxième commutateur de référence du port de tension considéré, chaque deuxième unité de commande comprenant :

- une deuxième sous-unité de calcul d'une deuxième valeur initiale souhaitée, la deuxième valeur initiale souhaitée étant une valeur souhaitée pour le déphasage égale au résultat d'une deuxième fonction de calcul appliquée à la première valeur initiale souhaitée,
- une deuxième sous-unité de détermination de l'écart entre la valeur de tension mesurée pour le port de tension considéré et la valeur de tension de consigne pour le port de tension considéré, pour obtenir un écart de tension déterminé,
- une deuxième sous-unité de correction propre à convertir l'écart de tension déterminé en une deuxième valeur correctrice pour le déphasage par application d'une deuxième fonction de conversion,
- une deuxième sous-unité d'addition de la deuxième valeur initiale souhaitée et de la deuxième valeur correctrice, pour obtenir une deuxième valeur candidate,
- une deuxième sous-unité d'ajustement propre à ajuster la deuxième valeur candidate pour obtenir une deuxième valeur à appliquer comprise entre deux deuxièmes valeurs extrêmes, la deuxième valeur extrême la plus basse étant le résultat de la deuxième fonction de calcul appliquée à la première valeur initiale souhaitée, et
- une deuxième sous-unité d'application de la deuxième loi de commande ayant comme déphasage la deuxième valeur à appliquer.

Selon des modes de réalisation particuliers, le système de régulation présente une ou plusieurs des caractéristiques suivantes, prise(s) isolément ou selon toutes les combinaisons techniquement possibles :

- chaque sous-unité d'ajustement est propre à donner comme valeur à appliquer la valeur candidate inchangée lorsque la valeur candidate est comprise entre les deux valeurs extrêmes et sinon la valeur extrême la plus proche de la valeur candidate.
- la deuxième valeur extrême la plus haute est le résultat d'une troisième fonction de calcul appliquée à la première valeur initiale souhaitée.
- au moins une fonction de calcul parmi la deuxième fonction de calcul et la troisième fonction de calcul est une fonction affine.
- chaque sous-unité de correction est un correcteur proportionnel intégral.
- chaque fonction de conversion est une fonction du premier ordre.
- chaque pont en H comporte deux points milieux chaque interface d'isolation comportant deux lignes reliant un point milieu respectif avec une extrémité de l'enroulement associé, une des deux lignes comportant une résistance en série avec une inductance.
- chaque enroulement comporte des spires, la première fonction de conversion présentant un gain dépendant des valeurs mesurées pour les tensions, de la deuxième valeur initiale souhaitée, du nombre de spires de chaque enroulement et des inductances des interfaces d'isolation.
- chaque enroulement comporte des spires, la deuxième fonction de conversion présentant un gain dépendant de la valeur de courant mesurée, de la première valeur initiale souhaitée, de la deuxième valeur initiale souhaitée, du nombre de spires de chaque enroulement et des inductances des interfaces d'isolation.
- chaque enroulement comporte des spires, la première fonction de calcul (dépendant, en outre, du nombre de spires de chaque enroulement et des inductances des interfaces d'isolation.

- un port de tension de sortie est un port bidirectionnel.
- chaque sous-unité de détermination est un soustracteur.
- la marge de sécurité est une valeur prédéfinie.

La description décrit aussi un convertisseur à multiples ponts actifs à alimentation hybride, le convertisseur à multiples ponts actifs comprenant :

- un port de courant d'entrée fonctionnant à un courant et comprenant un pont de commutateurs en H pour lequel un commutateur de référence est défini et fonctionnant à un courant, le commutateur de référence étant dit premier commutateur de référence et étant commandé par une première loi de commande, la première loi de commande présentant un premier rapport cyclique,
- au moins un port de tension de sortie fonctionnant à une tension, chaque port de tension comprenant un pont de commutateurs en H pour lequel un commutateur de référence est défini, chaque commutateur de référence étant dit deuxième commutateur de référence et étant commandé par une deuxième loi de commande respective, chaque deuxième loi de commande présentant un deuxième rapport cyclique prédéfini et un déphasage par rapport à la première loi de commande,
- un transformateur présentant des enroulements, chaque enroulement étant relié à un port par une interface d'isolation respective, et
- un système de régulation tel que précédemment décrit.

La description propose également un procédé de régulation d'un convertisseur à multiples ponts actifs à alimentation hybride, le convertisseur à multiples ponts actifs comprenant :

- un port de courant d'entrée comprenant un pont de commutateurs en H pour lequel un commutateur de référence est défini, le commutateur de référence étant dit premier commutateur de référence et étant commandé par une première loi de commande, la première loi de commande présentant un premier rapport cyclique,
- au moins un port de tension de sortie comprenant un pont de commutateurs en H pour lequel un commutateur de référence est défini, chaque commutateur de référence étant dit deuxième commutateur de référence et étant commandé par une deuxième loi de commande respective, chaque deuxième loi de commande présentant un deuxième rapport cyclique prédéfini et un déphasage par rapport à la première loi de commande,
- un transformateur présentant des enroulements, chaque enroulement étant relié à un port par une interface d'isolation respective,

le procédé étant propre à réguler le convertisseur à multiples ponts actifs à une consigne, la consigne comprenant une valeur de courant de consigne pour le courant du port de courant et au moins une valeur de tension de consigne pour un port de tension, le procédé comprenant les étapes de:

- mesure de valeurs mesurées, les valeurs mesurées comprenant le courant du port de courant et la tension de chaque port de tension,
- commande du premier commutateur de référence, l'étape de commande comprenant :

  - un premier calcul d'une première valeur initiale souhaitée, la première valeur initiale souhaitée étant une valeur souhaitée pour le premier rapport cyclique égale à la somme du résultat d'une première fonction de calcul appliquée aux valeurs de consigne et d'une marge de sécurité,
  - une première détermination de l'écart entre la valeur de courant mesurée et la valeur de courant de consigne, pour obtenir un écart de courant déterminé,
  - une première correction convertissant l'écart de courant déterminé en une première valeur correctrice pour le premier rapport cyclique par application d'une première fonction de conversion,
  - une première d'addition de la première valeur initiale souhaitée et de la première valeur correctrice, pour obtenir une première valeur candidate,
  - un premier ajustement propre à ajuster la première valeur candidate pour obtenir une première valeur à appliquer comprise entre deux première valeurs extrêmes, la première valeur extrême la plus basse étant le résultat de la première fonction de calcul appliquée aux valeurs mesurées,
  - une première application de la première loi de commande ayant comme rapport cyclique la première valeur à appliquer, et

- pour chaque port de tension ayant une valeur de tension de consigne, commande du deuxième commutateur de référence du port de tension considéré, chaque étape de commande du deuxième commutateur comprenant :

- un deuxième calcul d'une deuxième valeur initiale souhaitée, la deuxième valeur initiale souhaitée étant une valeur souhaitée pour le déphasage égale au résultat d'une deuxième fonction de calcul appliquée à la première valeur initiale souhaitée,
- une deuxième détermination de l'écart entre la valeur de tension mesurée pour le port de tension considéré et la valeur de tension de consigne pour le port de tension considéré, pour obtenir un écart de tension déterminé,
- une deuxième correction convertissant l'écart de tension déterminé en une deuxième valeur correctrice pour le déphasage par application d'une deuxième fonction de conversion,
- une deuxième addition de la deuxième valeur initiale souhaitée et de la deuxième valeur correctrice, pour obtenir une deuxième valeur candidate,
- un deuxième ajustement propre à ajuster la deuxième valeur candidate , pour obtenir une deuxième valeur à appliquer comprise entre deux deuxièmes valeurs extrêmes, la deuxième valeur extrême la plus basse étant le résultat de la deuxième fonction de calcul appliquée à la première valeur initiale souhaitée, et
- une deuxième application de la deuxième loi de commande ayant comme déphasage la deuxième valeur à appliquer.

Dans la présente description, l'expression « propre à » signifie indifféremment « adapté pour », « adapté à » ou « configuré pour ».

## BREVE DESCRIPTION DES DESSINS

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple d'utilisation d'un convertisseur à multiples ponts actifs à alimentation hybride,

- la figure 2 représente un schéma électrique d'un exemple de convertisseur à multiples ponts actifs à alimentation hybride, le convertisseur comprenant un système de régulation,

- la figure 3 représente un schéma d'une partie du système de régulation,

- la figure 4 représente un schéma d'une autre partie du système de régulation,

- la figure 5 représente l'évolution des signaux d'entrée et de sortie du convertisseur de la figure 2 dans un fonctionnement idéal,

- la figure 6 illustre schématiquement la conversion étoile-triangle, et

- les figure 7 à 10 présentent des résultats de simulation obtenus par la demanderesse.

## DESCRIPTION DETAILLEE DE MODES DE REALISATION PREFERES

Selon l'exemple décrit, le convertisseur 10 à multiples ponts actifs à alimentation hybride comporte trois ports 20, 22 et 24, un transformateur 26 et un système de régulation 28.

En ce sens, le convertisseur 10 est un convertisseur à triple ponts actifs.

Un tel convertisseur 10 est parfois dénommé convertisseur TAB, l'acronyme « TAB » renvoyant à la dénomination anglaise correspondante de « Triple Active Bridge ».

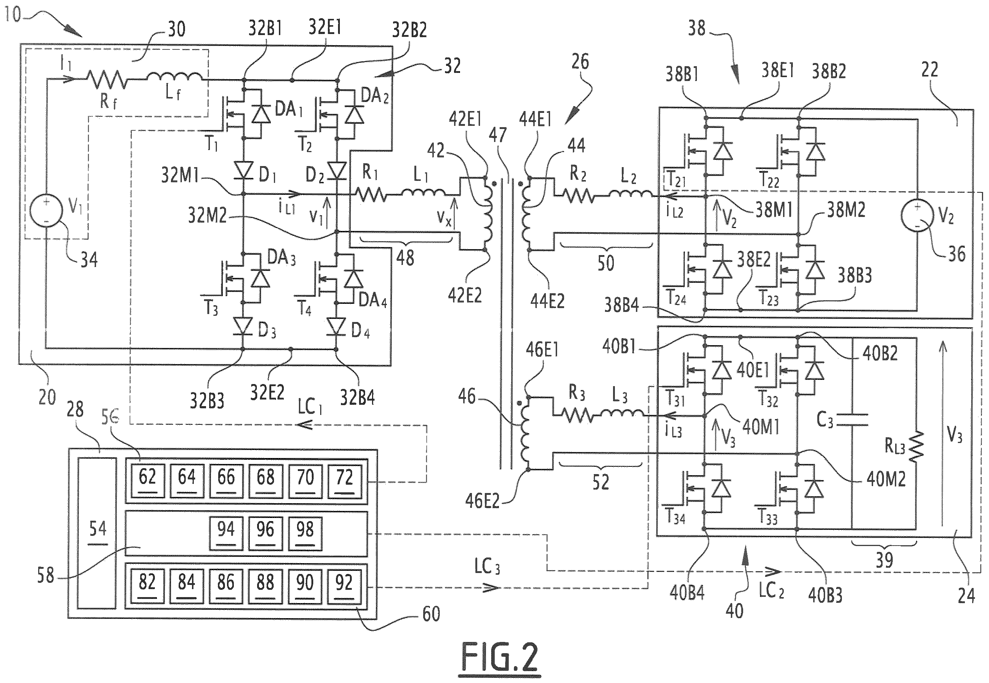

Selon l'exemple de la figure 2, le convertisseur 10 comporte un port de courant d'entrée 20, un premier port de tension 22 et un deuxième port de tension de sortie 24.

Le premier port de tension 22 est ici à la fois un port d'entrée et un port de sortie (caractère bidirectionnel).

Un tel convertisseur 10 peut, par exemple, être utilisé pour connecter un module photovoltaïque au port de courant d'entrée 20, une batterie sur le premier port de tension 22 et une charge en courant continu sur le deuxième port de tension de sortie 24.

Dans un tel cas, la référence de courant d'entrée du port de courant d'entrée 20 correspondrait au suivi du point maximal de puissance du module photovoltaïque. Ce suivi est plus souvent désigné par l'abréviation anglaise MPPT qui renvoie à la dénomination anglaise correspondante de « Maximum Power Point Tracker ».

Le port de courant 20 comporte une source de courant 30 et un premier pont de commutateurs en H 32.

La source de courant 30 est propre à délivrer un courant noté $I_1$ pour la suite.

La source de courant 30 comprend un générateur de tension 34, une résistance $R_f$ et une inductance $L_f$ en série.

Dans chacune des notations qui suivent, pour faciliter la lisibilité, le signe de référence d'un composant pourra correspondre à sa valeur. Typiquement, la résistance de la source de courant 30 est notée par le signe de référence $R_f$ et la valeur de la résistance est notée $R_f$.

Le générateur de tension 34 produit une tension $V_1$.

Le générateur de tension 34 comporte un pôle positif et un pôle négatif.

La source de courant 30 est propre à fonctionner à un courant déterminant le courant de fonctionnement du port de courant 20.

Le port de courant 20 est un port unidirectionnel.

Cela signifie que le port de courant 20 est uniquement propre à envoyer de la puissance vers le transformateur 26.

Pour simplifier les notations, chaque pont de commutateurs en H sera dénommé pont en H.

Le premier pont en H 32 comporte quatre branches 32B1 à 32B4, une première extrémité 32E1 et une deuxième extrémité 32E2 et deux points milieux 32M1 et 32M2.

La première branche 32B1 s'étend entre la première extrémité 32E1 et le premier point milieu 32M1, la deuxième branche 32B2 s'étend entre la première extrémité 32E1 et le deuxième point milieu 32M2, la troisième branche 32B3 s'étend entre le premier point milieu 32M1 et la deuxième extrémité 32E2 et la quatrième branche 32B4 s'étend entre le deuxième point milieu 32M2 et la deuxième extrémité 32E2.

La première extrémité 32E1 est reliée à l'inductance $L_f$ de la source de courant 30 et la deuxième extrémité 32E2 au pôle négatif du générateur de tension 34.

Comme son nom de « pont de commutateurs » l'indique, chaque branche 32B1 à 32B4 du premier pont en H 32 comporte respectivement un commutateur $T_1$ à $T_4$.

Chaque commutateur est ici un transistor.

En outre, du fait que chaque interrupteur d'un pont en H a dans l'exemple décrit un fonctionnement tout ou rien, le terme d'interrupteur sera utilisé dans la suite de la description pour désigner les transistors. Néanmoins, ce qui va être décrit est valable de manière plus générale pour un interrupteur à la place d'un interrupteur.

En outre, chaque branche 32B1 à 32B4 du premier pont en H 32 comporte deux diodes, une diode DA1 à DA4 en parallèle de l'interrupteur $T_1$ à $T_4$ et une diode D1 à D4 en série avec l'interrupteur $T_1$ à $T_4$.

En outre, le premier interrupteur $T_1$ est défini comme l'interrupteur de référence du port de courant 20 et sera dénommé premier interrupteur de référence $T_1$ dans la suite.

Le premier interrupteur de référence $T_1$ du port de courant 20 est commandé par une première loi de commande $LC_1$. La première loi de commande $LC_1$ présente un premier rapport cyclique noté $D_1$.

Le quatrième interrupteur $T_4$ est commandé par la même première loi de commande $LC_1$ alors que le deuxième interrupteur $T_2$ et le troisième interrupteur $T_3$ sont commandés par une même loi déphasée de 180° par rapport à la première loi de commande $LC_1$. Le déphasage de 180° correspond à un décalage temporel de la moitié de la période de commutation $T_S/2$.

A ce titre, il serait possible d'appliquer ce qui va être décrit en choisissant comme premier interrupteur de référence l'un des interrupteurs $T_2$, $T_3$ ou $T_4$.

Le premier port de tension 22 comporte une deuxième source de tension 36 et un deuxième pont en H 38.

Le premier port de tension 22 fonctionne à une tension, dite deuxième tension $V_2$. Cette deuxième tension $V_2$ correspond ici à la tension délivrée par la deuxième source de tension 36.

Le premier port de tension 22 est un port bidirectionnel.

Cela signifie que le premier port de tension 22 reçoit provenant du transformateur 26 et délivre de la puissance à travers le transformateur 26.

Le deuxième pont en H 38 présente une structure similaire à celle du premier pont en H 30 (celui du port de courant 20) avec quatre branches 38B1 à 38B4, des extrémités 38E1 et 38E2 et deux points milieux 38M1 et 38M2.

Dans le cas représenté, chaque branche 38B1 à 38B4 du deuxième pont en H 38 comporte également un transistor et une diode en parallèle similairement aux branches du premier pont en H 30 mais ne comporte pas de diode en série.

Pour la suite, le transistor d'une branche 38Bi du deuxième pont en H 38 est noté $T_{2i}$.

La première extrémité 38E1 du deuxième pont en H 38 est reliée au pôle positif de la deuxième source de tension 36 et la deuxième extrémité 38E2 du deuxième pont en H 38 est reliée au pôle négatif de la deuxième source de tension 36.

En outre, le premier interrupteur $T_{21}$ est défini comme l'interrupteur de référence du premier port de tension 22, qui sera dans la suite le deuxième interrupteur de référence $T_{21}$ pour éviter toute confusion avec le premier interrupteur de référence $T_1$.

Le deuxième interrupteur de référence $T_{21}$ du premier port de tension 22 est commandé par une deuxième loi de commande $LC_2$.

La deuxième loi de commande $LC_2$ présente un deuxième rapport cyclique noté $D_2$ et un déphasage, noté

deuxième $\varphi_2$, par rapport à la première loi de commande LC$_1$.

Pour la suite, le deuxième rapport cyclique noté $D_2$ est fixé à une valeur prédéfinie, choisi de manière non limitative ici comme égale à 0,5.

Le deuxième port de tension 24 comporte une charge 39 et un troisième pont en H 40.

La charge 39 comprend un condensateur C$_3$ parallèle avec une résistance R$_{L3}$.

Le deuxième port de tension 24 fonctionne à une tension, dite troisième tension V$_3$. Cette troisième tension V$_3$ correspond ici à la tension aux bornes de la résistance R$_{L3}$.

Le deuxième port de tension 24 est un port unidirectionnel.

Cela signifie que le deuxième port de tension 24 reçoit de la puissance provenant du transformateur 26.

Le troisième pont en H 40 présente une structure similaire à celle du deuxième pont en H 38 (celui du premier port de tension 22) avec quatre branches 40B1 à 40B4, des extrémités 40E1 et 40E2 et deux points milieux 40M1 et 40M2.

Dans le cas représenté, chaque branche 40B1 à 40B4 comporte les mêmes composants que les branches 38B1 à 38B4 du troisième pont en H 38, à savoir un transistor et une diode en parallèle.

Pour la suite, le transistor d'une branche 40B1 à 40B4 du troisième pont en H 40 est noté T$_{3i}$.

La première extrémité 40E1 du troisième pont en H 40 est reliée à une borne de la capacité C$_3$ et une borne de la résistance R$_{L3}$ de sorte que la deuxième extrémité 40E2 du troisième pont en H 40 est reliée à une autre borne de la capacité C$_3$ et une autre borne de la résistance R$_{L3}$.

En outre, le premier interrupteur T$_{31}$ est défini comme l'interrupteur de référence du deuxième port de tension 24, qui sera dans la suite le troisième interrupteur de référence T$_{31}$ pour éviter toute confusion avec les autres interrupteurs de référence T$_1$ et T$_{21}$.

Le troisième interrupteur de référence T$_{31}$ du deuxième port de tension 24 est commandé par une troisième loi de commande LC$_3$.

La troisième loi de commande LC$_3$ présente un troisième rapport cyclique noté $D_3$ et un déphasage, noté troisième déphasage $\varphi_3$, par rapport à la première loi de commande LC$_1$.

Pour la suite, le troisième rapport cyclique noté $D_3$ est fixé à une valeur prédéfinie, choisi de manière non limitative ici comme égale à 0,5.

Le transformateur 26 présente des enroulements 42, 44 et 46 reliés par un cœur 47

Chaque enroulement 42, 44 et 46 est relié à un port 20 à 24 par une interface d'isolation 48 à 52 respective.

Plus précisément, le transformateur 26 présente un premier enroulement 42 relié au port de courant 20 par une première interface d'isolation 48, un deuxième enroulement 44 relié au premier port de tension 22 par une deuxième interface d'isolation 50 et un troisième enroulement 46 relié au deuxième port de tension 24 par une troisième interface d'isolation 52.

Chaque enroulement est un ensemble de spires s'étendant entre une première extrémité notée XE1 (où X est le signe de référence de l'enroulement considéré) et une deuxième extrémité XE2.

La première interface d'isolation 48 comprend une première inductance L$_1$ en série avec une première résistance R$_1$.

Le premier point milieu 32M1 du premier pont en H 32 est relié à la première résistance R$_1$ et le deuxième point milieu 32M2 du premier pont en H 32 est relié à la deuxième extrémité 42E2 du premier enroulement 42.

La deuxième interface d'isolation 50 comprend une deuxième inductance L$_2$ en série avec une deuxième résistance R$_2$.

Le premier point milieu 38M1 du deuxième pont en H 38 est relié à l'inductance L$_2$ et le deuxième point milieu 38M2 du deuxième pont en H 38 est relié à la deuxième extrémité 44E2 du deuxième enroulement 44.

La troisième interface d'isolation 52 comprend une troisième inductance L$_3$ en série avec une troisième résistance R$_3$.

Le premier point milieu 40M1 du troisième pont en H 40 est relié à la troisième inductance L$_3$ et le deuxième point milieu 40M2 du troisième pont en H 40 est relié à la deuxième extrémité 46E2 du troisième enroulement 46.

Dans chacune des interfaces d'isolation 48, 50 ou 52, la résistance R$_1$, R$_2$ ou R$_3$ et l'inductance L$_1$, L$_2$ ou L$_3$ sont celles des enroulements 42, 44 ou 46 associés. A ce titre, la résistance R$_1$, R$_2$ ou R$_3$ correspond à une résistance parasite.

Dans certains modes de réalisation, ces résistances ou inductances proviennent de composants externes.

Le système de régulation 28 est propre à réguler le convertisseur 10 à multiples ponts actifs à une consigne.

En l'occurrence, la consigne est une valeur de courant de consigne pour le courant du port de courant 20 et une valeur de tension de consigne pour le deuxième port de tension 24.

De fait, dans l'exemple décrit, le premier port tension 22 n'a pas de consigne. la tension du premier port de tension 22 est imposée par la valeur de tension V2 délivrée par la deuxième source de tension 36 et son courant est imposé par le fait que la somme algébrique des puissances entrantes et sortantes convertisseur 10 est nulle.

La valeur de courant de consigne est notée $I_{1,ref}$, et la valeur de tension de consigne pour le deuxième port de tension 24 est notée $V_{3,ref}$.

Le système de régulation 28 assure qu'à tout instant, le fonctionnement du convertisseur 10 n'endommage pas aucun composant du convertisseur 10.

Les différentes conditions sont détaillées dans la partie Annexe.

Le système de régulation 28 comprend une unité de mesure 54, une première unité de commande 56, une deuxième unité de commande 58 et une troisième unité de commande 60.

L'unité de mesure 54 est propre à mesurer plusieurs valeurs du convertisseur 10.

Selon l'exemple décrit, les valeurs mesurées comprennent le courant $I_1$ du port de courant 20 et la tension $V_2$ et $V_3$ de chaque port de tension 22 et 24.

L'unité de mesure 54 est reliée aux autres unités de commande 56 à 60 pour leur communiquer les valeurs mesurées.

La première unité de commande 56 est propre à commander le premier transistor de référence $T_1$ à l'aide d'une première loi de commande $LC_1$ adaptée.

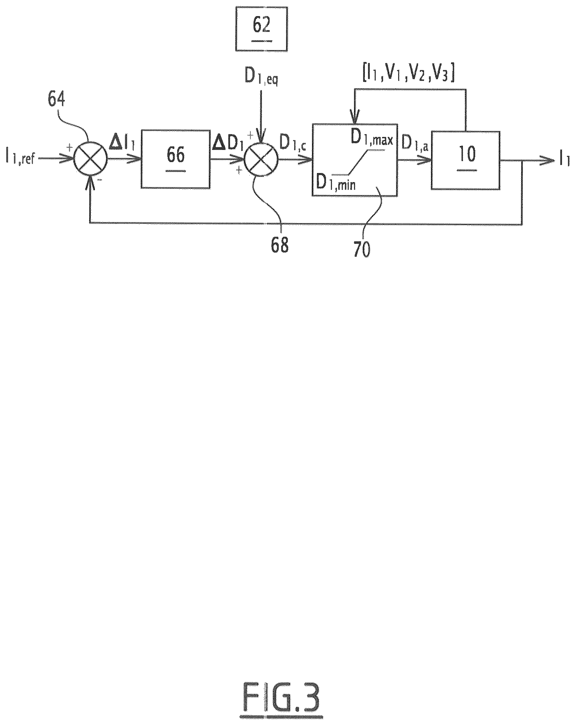

Comme visible sur les figures 2 et 3, la première unité de commande 56 comporte une première sous-unité de calcul 62, une première sous-unité de détermination 64, une première sous-unité de correction 66, une première sous-unité d'addition 68, une première sous-unité d'ajustement 70 et une première sous-unité d'application 72.

La première sous-unité de calcul 62 est propre à calculer une première valeur initiale souhaitée notée $D_{1,eq}$.

Pour cela, la première sous-unité de calcul 62 applique une première fonction de calcul FC1 aux valeurs de consigne puis additionne au résultat une marge de sécurité $\varepsilon$.

La première fonction de calcul FC1 dépend, en outre, du nombre de spires de chaque enroulement 42 à 46 et de l'inductance des interfaces d'isolation 48 à 52.

Le résultat de la première fonction de calcul FC1 est noté $D_{1,min\_ref}$.

La première fonction de calcul FC1 est telle que :

$$D_{1,\min\_ref} = \frac{2L_1 I_{1,ref}}{\left(L_b . V_{2,ref} . \frac{n_1}{n_2} + L_c . V_{3,ref} . \frac{n_1}{n_3}\right) . T_s} + \frac{1}{2}$$

où :

- $n_1$ est le nombre de spires de premier enroulement 42,

- $n_2$ est le nombre de spires de deuxième enroulement 44,

- $n_3$ est le nombre de spires de troisième enroulement 46,

-

$$L_b = \frac{\frac{1}{\frac{1}{L_1} + \frac{1}{L_3'}}}{L_2' + \frac{1}{\frac{1}{L_1} + \frac{1}{L_3'}}},$$

avec $L_k' = \left(\frac{n_1}{n_k}\right)^2 L_k$ pour k = 1, 2 ou 3

-

$$L_c = \frac{\frac{1}{\frac{1}{L_1} + \frac{1}{L_2'}}}{L_3' + \frac{1}{\frac{1}{L_1} + \frac{1}{L_2'}}},$$

et

- $T_s$ est la période de commutation correspondant à l'inverse de la fréquence de conversion $f_s$ choisie1.

Une fois que cette valeur $D_{1,min\_ref}$ est obtenue, il vient :

$$D_{1,eq} = D_{1,\min\_ref} + \epsilon$$

Selon l'exemple décrit, la marge de sécurité $\varepsilon$ est une valeur prédéfinie, par exemple fixée à 0,01.

Selon une variante plus élaborée, la marge de sécurité $\varepsilon$ prend en compte d'autres éléments comme les variations des sources de tensions ou l'incertitude sur la valeur des inductance.

La première sous-unité de détermination 64 est propre à déterminer l'écart entre la valeur de courant $I_1$ mesurée et la valeur de courant de consigne $I_{1,ref}$.

La première sous-unité de détermination 64 est, ici, un soustracteur.

La première sous-unité de détermination 64 obtient ainsi l'écart de courant déterminé, notée $\Delta I_1$ et qui vérifie donc :

$$\Delta I_1 = I_{1,ref} - I_1$$

La première sous-unité de correction 66 est propre à convertir l'écart de courant déterminé $\Delta I_1$ en une première valeur correctrice pour le premier rapport cyclique.

La première valeur correctrice est notée $\Delta D_1$.

Pour obtenir la première valeur correctrice $\Delta D_1$, la première sous-unité de correction 66 applique une première fonction de conversion sur l'écart de courant déterminé $\Delta I_1$.

La première fonction de conversion est notée $G_{i1_r}$.

La première fonction de conversion $G_{i1_r}$ est ici une fonction du premier ordre.

De manière plus spécifique, la première fonction de conversion $G_{i1_r}$ présente un gain dépendant des valeurs mesurées pour les tensions, de la deuxième valeur initiale souhaitée, du nombre de spires de chaque enroulement 42 à 46 et de l'inductance des interfaces d'isolation 48 à 52.

Selon l'exemple décrit, la première fonction de conversion $G_{i1_r}$ est telle que :

$$G_{i1_r}(s) = \left.\frac{I_1(s)}{D_1(s)}\right|_{\substack{\hat{\varphi}_2=0 \\ \hat{\varphi}_3=0 \\ \hat{V}_3=0}} = \frac{a}{(s+c)}$$

Où :

- $s$ désigne la variable de Laplace,

- 

$$a = \frac{2L_b}{L_f.(1-L_a)}.\frac{n_1}{n_2}.V_2 + \frac{2L_c}{L_f.(1-L_a)}.\frac{n_1}{n_3}.V_{3,ref},$$

- la notation ^ signifie petite variation autour du point d'équilibre,

- 

$$L_a = \frac{\frac{1}{\frac{1}{L_2'}+\frac{1}{L_3'}}}{L_1+\frac{1}{\frac{1}{L_2'}+\frac{1}{L_3'}}},$$

et

- 

$$c = \frac{R_f}{L_f} + \frac{4L_1}{L_f.(1-L_a).T_s}.$$

La première sous-unité de correction 66 forme ainsi un correcteur proportionnel intégral.

Alternativement, il est également possible que la première sous-unité de correction 66 utilise une première fonction de correction $G_{i1r2}$ plus élaborée comme proposé dans la partie annexe

La première sous-unité d'addition 68 est propre à obtenir une première valeur candidate $D_{1,c}$ par addition de la première valeur initiale souhaitée $D_{1,eq}$ avec la première valeur correctrice $\Delta D_1$.

Il vient ainsi :

$$D_{1,c} = D_{1,eq} + \Delta D_1$$

La première sous-unité d'ajustement 70 est propre à obtenir une première valeur à appliquer $D_{1,app}$.

Pour cela, la première sous-unité d'ajustement 70 ajuste la première valeur candidate $D_{1,c}$ pour obtenir la première valeur à appliquer $D_{1,a}$.

Cet ajustement vise à assurer que la première valeur à appliquer $D_{1,a}$ est comprise entre deux premières valeurs extrêmes.

Les deux premières valeurs extrêmes sont notées $D_{1,min}$ et $D_{1,max}$.

La première valeur extrême $D_{1,min}$ est le résultat de la première fonction de calcul FC1 appliquée aux valeurs mesurées selon la formule décrite plus haut, c'est-à-dire qu'il vient :

$$D_{1,\min} = \frac{2L_1 I_1}{\left( L_b . V_2 . \dfrac{n_1}{n_2} + L_c . V_3 . \dfrac{n_1}{n_3} \right) . T_s} + \frac{1}{2}$$

Selon l'exemple décrit, la première valeur extrême $D_{1,max}$ est fixée à la valeur maximale pour le premier rapport cyclique, à savoir 1.

La première sous-unité d'ajustement 70 est propre à donner comme valeur à appliquer la valeur candidate inchangée lorsque la valeur candidate est comprise entre les deux valeurs extrêmes et sinon la valeur extrême la plus proche de la valeur candidate.

Autrement formulé, il vient :

$$\begin{cases} D_{1,app} = D_{1,c} \ si \ D_{1,c} \in \left[ D_{1,\min} , D_{1,max} \right] \\ D_{1,app} = D_{1,\min} \ si \ D_{1,c} < D_{1,\min} \\ D_{1,app} = D_{1,\max} si \ D_{1,c} > D_{1,\max} \end{cases}$$

Il est ainsi obtenu une première loi de commande à appliquer, cette première loi de commande ayant comme rapport cyclique la première valeur à appliquer.

La première sous-unité d'application 72 est propre à appliquer la première loi de commande à appliquer.

La deuxième unité de commande 58 et la troisième unité de commande 60 commandent respectivement le deuxième interrupteur de référence $T_{21}$ et le troisième interrupteur de référence $T_{31}$.

La troisième unité de commande 60 étant l'unité de commande comportant le plus de sous-unités du fait qu'une consigne est fixée pour le troisième interrupteur de référence $T_{31}$, elle est d'abord décrite avant la deuxième unité de commande 58.

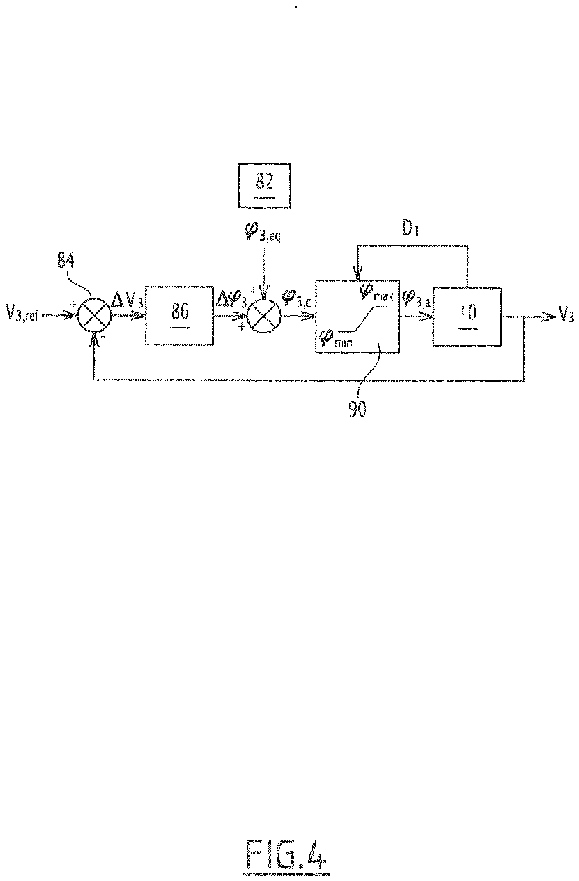

Comme visible sur la figure 4, la troisième unité de commande 60 comporte une troisième sous-unité de calcul 82, une troisième sous-unité de détermination 84, une troisième sous-unité de correction 86, une troisième sous-unité d'addition, une troisième sous-unité d'ajustement 90 et une troisième sous-unité d'application 92.

La troisième sous-unité de calcul 82 est propre à calculer une troisième valeur initiale souhaitée notée $\varphi_{3,eq}$.

Pour cela, la troisième sous-unité de calcul 82 applique une deuxième fonction de calcul FC2 sur la première valeur initiale souhaitée $D_{1,eq}$.

La deuxième fonction de calcul FC2 est ici une fonction calculée à partir du modèle mathématique exposé dans la partie suivante, à un certain point d'opération.

Comme cela apparaîtra, la valeur $\varphi_{3,eq}$ est obtenue par résolution d'un système de deux équations à deux inconnues une fois que la valeur du premier rapport cyclique est fixée.

La troisième sous-unité de détermination 84 est propre à déterminer l'écart entre la valeur de tension mesurée $V_3$ pour le deuxième port de tension de sortie 24 et la valeur de tension de consigne $V_{3,ref}$ pour le deuxième port de tension de sortie 24.

La troisième sous-unité de détermination 84 est, ici, un soustracteur.

La troisième sous-unité de détermination 84 obtient ainsi l'écart de tension déterminé, notée $\Delta V_3$ et qui vérifie

donc :

$$\Delta V_3 = V_{3,ref} - V_3$$

La troisième sous-unité de correction 86 est propre à convertir l'écart de tension déterminé $\Delta V_3$ en une troisième valeur correctrice pour le troisième déphasage.

La troisième valeur correctrice est notée $\Delta \varphi_3$.

Pour obtenir la troisième valeur correctrice $\Delta \varphi_3$, la troisième sous-unité de correction applique une deuxième fonction de conversion sur l'écart de tension déterminé $\Delta V_3$.

La deuxième fonction de conversion est notée $G_{V3_r}$.

La deuxième fonction de conversion $G_{V3_r}$ est ici une fonction du premier ordre.

De manière plus spécifique, la deuxième fonction de conversion $G_{V3_r}$ présente un gain dépendant de la valeur de courant mesurée de la première valeur initiale souhaitée, de la deuxième valeur initiale souhaitée, du nombre de spires de chaque enroulement 42 à 46 et de l'inductance des interfaces d'isolation 48 à 52.

Selon l'exemple décrit, la deuxième fonction de transfert $G_{V3_r}$ est telle que :

$$G_{v3_r}(s) = \left.\frac{V_3(s)}{\varphi_3(s)}\right|_{\substack{\widehat{\varphi}_2=0 \\ \widehat{D}_1=0}} = \frac{e}{(s+d)}$$

Où :

-

$$d = \frac{1}{C_3 R_{L3}},$$

et

-

$$e = \frac{4}{\pi C_3} \cdot \frac{n_1}{n_3} \cdot \left(I_{13,R,eq} \cdot \sin(D_{1,eq} \cdot \pi + \varphi_{3,eq}) + I_{13,I,eq} \cdot \cos(D_{1,eq} \cdot \pi + \varphi_{3,eq}) + \right.$$

$$\left. I_{23,R,eq} \cdot \sin(D_{1,eq} \cdot \pi + \varphi_{3,eq}) + I_{23,I,eq} \cdot \cos(D_{1,eq} \cdot \pi + \varphi_{3,eq})\right)$$

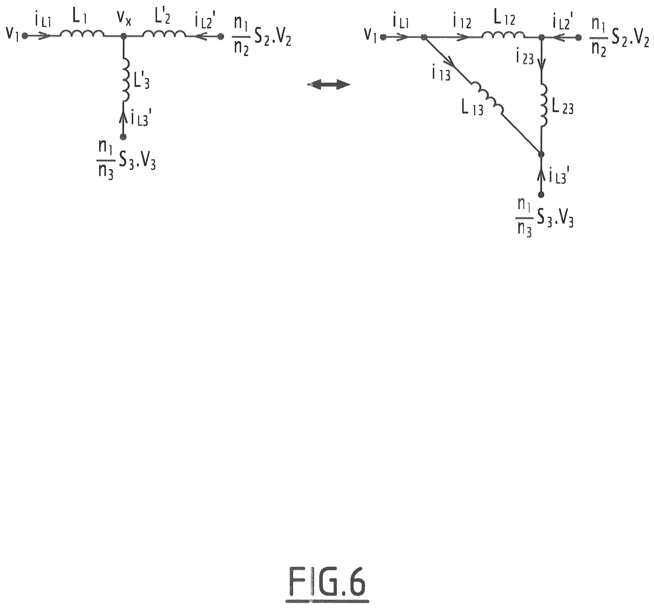

- *R* en indice désigne la valeur réelle du premier harmonique (de courant ici),
- *I* en indice désigne la valeur imaginaire,
- $I_{13,R,eq}$ est le courant circulant dans l'inductance $L_{13}$ de la figure 6 (voir détails en référence à cette figure), et
- $I_{23,R,eq}$ est le courant circulant dans l'inductance $L_{23}$ de la figure 6 (voir détails en référence à cette figure).

La troisième sous-unité de correction 86 forme ainsi un correcteur proportionnel intégral.

La troisième sous-unité d'addition est propre à obtenir une troisième valeur candidate $\varphi_{3,c}$ par addition de la troisième valeur initiale souhaitée $\varphi_{3,eq}$ avec la troisième valeur correctrice $\Delta \varphi_3$.

Il vient ainsi :

$$\varphi_{3,c} = \varphi_{3,eq} + \Delta \varphi_3$$

La troisième sous-unité d'ajustement 90 est propre à obtenir une troisième valeur à appliquer $\varphi_{3,a}$.

Pour cela, la troisième sous-unité d'ajustement 90 ajuste la troisième valeur candidate $\varphi_{3,c}$ pour obtenir la troisième valeur à appliquer $\varphi_{3,a}$.

Cet ajustement vise à assurer que la troisième valeur à appliquer $\varphi_{3,a}$ est comprise entre deux troisièmes valeurs extrêmes.

Les deux troisièmes valeurs extrêmes sont notées $\varphi_{3,min}$ et $\varphi_{3,max}$.

Chacune des troisièmes valeurs extrêmes $\varphi_{3,min}$ et $\varphi_{3,max}$ est le résultat de l'application d'une fonction affine respective appliquée à la première valeur initiale souhaitée $D_{1,eq}$.

Plus spécifiquement, la troisième valeur extrême $\varphi_{3,min}$ est le résultat de la deuxième fonction de calcul FC2 appliquée à la première valeur initiale souhaitée $D_{1,eq}$, de sorte qu'en l'espèce :

$$\varphi_{3,min} = \pi \left( D_{1,eq} - \frac{1}{2} \right)$$

Pour la troisième valeur extrême $\varphi_{3,min}$ est le résultat d'un troisième fonction de calcul FC3 appliquée à la première valeur initiale souhaitée $D_{1,eq}$. La troisième fonction de calcul FC3 est telle que :

$$\varphi_{3,max} = \pi \left( \frac{3}{2} - D_{1,eq} \right)$$

La troisième sous-unité d'ajustement 90 est alors propre à donner comme valeur à appliquer la valeur candidate inchangée lorsque la valeur candidate est comprise entre les deux valeurs extrêmes et sinon la valeur extrême la plus proche de la valeur candidate.

Autrement formulé, il vient :

$$\begin{cases} \varphi_{3,app} = \varphi_{3,c} \ si \ \varphi_{3,c} \in \left[ \varphi_{3,min}, \varphi_{3,max} \right] \\ \varphi_{3,app} = \varphi_{3,min} \ si \ \varphi_{3,c} \leq \varphi_{3,min} \\ \varphi_{3,app} = \varphi_{3,max} \ si \ \varphi_{3,c} \geq \varphi_{3,max} \end{cases}$$

Il est ainsi obtenu une troisième loi de commande à appliquer, cette troisième loi de commande ayant comme rapport cyclique la troisième valeur prédéfinie et comme déphasage la troisième valeur à appliquer $\varphi_{3,a}$.

La troisième sous-unité d'application 92 est propre à appliquer la troisième loi de commande à appliquer.

En ce qui concerne la deuxième unité de commande 58, par rapport aux deux autres unités de commande 54 et 60, elle fonctionne en boucle ouverte.

Ceci implique que la deuxième unité de commande 58 comporte uniquement une deuxième sous-unité de calcul 94, une deuxième sous-unité d'ajustement 96 et une sous-unité d'application 98.

Les fonctionnements de ces deuxièmes sous-unités 94, 96 et 98 sont similaires à ceux décrits pour les troisièmes sous-unités correspondantes (les sous-unités 82, 90 et 92).

Du fait de son fonctionnement en boucle ouverte, la deuxième unité de commande 58 ne comporte pas de deuxièmes sous-unités ayant le rôle des troisièmes sous-unités.

Comme explicité dans la partie démonstration, le système de régulation 28 permet ainsi d'assurer un fonctionnement stable du convertisseur 10 et ce, pour tout point de fonctionnement.

En outre, le système de régulation 28 peut être appliqué à d'autres configurations du convertisseur 10.

Des exemples de telles configurations sont données dans la partie 2 de l'annexe.

**ANNEXE**

**1 - CAS GENERAL**

*1.1 - Topologie du convertisseur*

Le convertisseur 10 est un convertisseur multiports hybride DC-DC comportant un commutateur de courant DC-AC du côté port de courant et deux onduleurs de tension du côté ports de tension.

L'abréviation « DC » renvoie à la dénomination anglaise correspondante de « Direct Current » qui signifie littéralement « courant direct » tandis que l'abréviation « AC » renvoie à la dénomination anglaise correspondante de « Alternative Current » qui signifie littéralement « courant alternatif »

La figure 2 montre la présence d'une source de courant 26 temporaire au niveau port de courant 20 (port 1) et de ponts en H 38 et 40 sur le premier port de tension 22 (port 2) et le deuxième port de tension 24 (port 3). Le port de courant 20 représente une source de puissance (par exemple, un module photovoltaïque), le premier port de tension 22 (port 2) est bidirectionnel (par exemple, système de batterie et réseau électrique) et le deuxième port de tension 2 (port 3) est une charge DC.

Les ports 20, 22 et 24 de ce convertisseur 10 sont couplés du fait de la présence d'une inductance sur chaque interface d'isolation 48 à 52, qui peut être soit une inductance de fuite du transformateur 26 seule ou en série avec une inductance externe. En conséquence, ce convertisseur 10 se comporte comme un système multi-variable ayant des entrées et sorties multiples (MIMO). Autrement formulé, changer un paramètre de contrôle a un effet sur les ports 20, 22 et 24 du convertisseur 10.

Contrôler le flux de puissance de ce convertisseur 10 peut être réalisé en régulant le courant d'entrée $i_1$ du port de

courant 20 et la tension de sortie $V_3$ du deuxième port de tension 24.

Du fait que le système est un convertisseur 10 multiports couplés, la somme algébrique de toutes les puissances d'entrée et de sortie du système devraient approximativement être égal à 0 (ou égale aux pertes du système).

Ainsi, la puissance qui circule depuis et dans le premier port de tension 22 est imposée selon la formule suivante (en négligeant la puissance stockée dans le cœur magnétique 47 du transformateur 26):

$$P_2 = -P_1 - P_3$$

Où :

- $P_1$ est le flux de puissance circulant depuis et dans le port de courant 20, et
- $P_3$ est le flux de puissance circulant depuis et dans le deuxième port de tension 24.

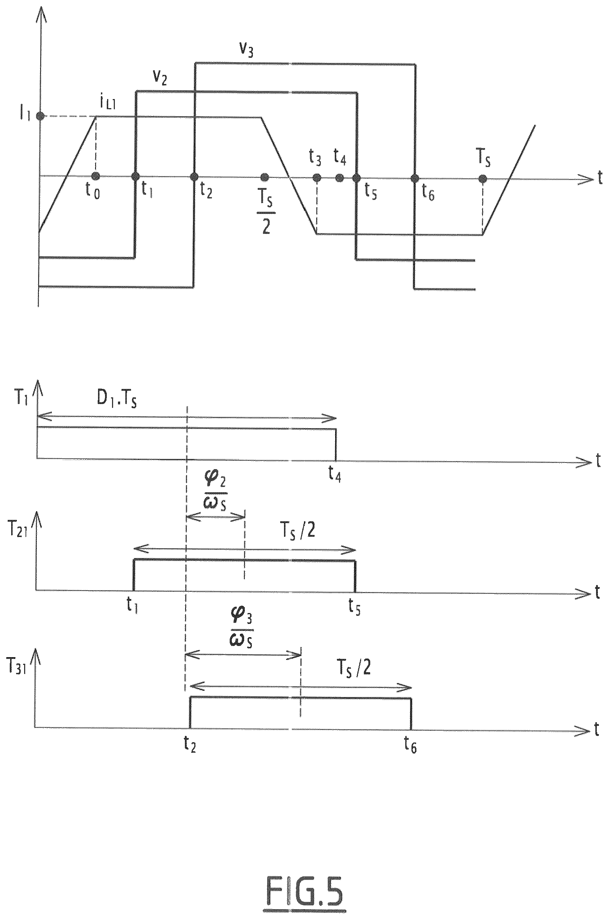

La forme d'onde des signaux AC du convertisseur 10 circulant dans les enroulements 42, 44, 46 du transformateur 26 sont visibles sur la figure 5 ainsi que les signaux de commandes des interrupteurs de référence $T_1$, $T_{21}$, et $T_{31}$.

La forme trapézoïdale de l'évolution du courant $i_{L1}$ montrée sur la figure 5 correspond au courant circulant dans le premier enroulement. Les paramètres $v_2$ et $v_3$ sont respectivement les tensions AC du côté transformateur 26 des ports de tension 22 et 24. $D_1$ est le rapport cyclique de la commande des interrupteurs du premier port de courant 20 ($0.5 < D_1 < 1$). $\varphi_2$ et $\varphi_3$ sont respectivement les déphasages (en radians) des signaux de commandes des interrupteurs de référence $T_{21}$ et $T_{31}$ par rapport au interrupteur de référence $T_1$. Les rapports cycliques des commandes des interrupteurs des ports de tension 22 et 24 sont fixés à $D_2 = D_3 = 50\%$ sur le mode de fonctionnement, de sorte que les tensions $v_2$ et $v_3$ sont les tensions visibles sur la figure 5. $T_s$ désigne la période de commutation ($f_s$ est la fréquence de commutation).

Les formes des formes d'onde de la figure 5 sont une approximation de la forme réelle des signaux. En réalité, le courant $i_{L1}$ n'est pas parfaitement trapézoïdale, comme il est légèrement affecté par la commutation des ports de tension 22 et 24 aux instants $t_1$ et $t_5$ pour le premier port de tension 22 d'un côté et $t_2$ et $t_6$ pour le deuxième port de tension 24 d'un autre côté.

La figure 6 montre l'équivalence triangle-étoile the star-delta des circuits des enroulements du transformateur 26 au niveau du port 1, avec $v_2 = S_2 . V_2$ et $v_3 = S_3 . V_3$. $S_2$ et $S_3$ respectivement les fonctions de commutation des ports 2 et 3. $n_1$, $n_2$ et $n_3$ désignent respectivement le nombre de spires de chaque enroulement 42, 44 et 46 du transformateur 26.

Dans ces circuits équivalents, the port de courant 20 est remplacé par une source de tension équivalente. L'expression de la tension $v_1$ sur ce port au niveau du transformateur 26 est détaillé ultérieurement. La tension au point $v_x$ peut être obtenue par la relation R1 suivante:

$$v_x = L_a . v_1 + L_b . v_2{}' + L_c . v_3{}'$$

Où:

- 

$$L_a = \frac{\frac{1}{\frac{1}{L_2{}'} + \frac{1}{L_3{}'}}}{L_1 + \frac{1}{\frac{1}{L_2{}'} + \frac{1}{L_3{}'}}}$$

avec $L_k' = \left(\frac{n_1}{n_k}\right)^2 L_k$

- 

$$L_b = \frac{\frac{1}{\frac{1}{L_1} + \frac{1}{L_3{}'}}}{L_2{}' + \frac{1}{\frac{1}{L_1} + \frac{1}{L_3{}'}}},$$

-

$$L_c = \frac{\frac{1}{\frac{1}{L_1'} + \frac{1}{L_2'}}}{L_3' + \frac{1}{\frac{1}{L_1'} + \frac{1}{L_2'}}},$$

et

- Les inductances du circuit équivalent en triangle sont calculées comme suit:

$$L_{ij} = \begin{cases} NA, & \forall i = j \\ L_i' + L_j' + L_i' L_j' \left( \displaystyle\sum_{k \neq i,j}^{n} \frac{1}{L_k'} \right), & \forall i \neq j \end{cases}$$

### 1.2 - Principe de fonctionnement

Pour un point de fonctionnement donné, le cycle de fonctionnement de ce convertisseur 10 est divisé selon quatre intervalles de temps successifs.

Le premier intervalle de temps rassemble les instants $t$ tels que $0 \leq t \leq t_0$.

A l'instant $t = 0$, les interrupteurs $T_1$ et $T_4$ sont mis dans l'état passant. Les interrupteurs $T_2$ et $T_3$ sont déjà dans l'état passant (généralement avant $t = 0$ du fait de la mise en œuvre précédente du cycle). Dans cet intervalle de temps, tous les interrupteurs du port de courant 20 sont dans l'état passant, ce qui implique que $v_1 = 0$.

Ainsi, en utilisant la relation R1, il vient :

$$v_x = L_b . v_2' + L_c . v_3'$$

Au niveau des ports de tension, les interrupteurs $T_{22}$, $T_{24}$, $T_{32}$ et $T_{34}$ devraient être dans l'état passant, de sorte que :

$$v_2' = -V_2 . \frac{n_1}{n_2}, \, v_3' = -V_3 . \frac{n_1}{n_3} \text{ et } v_x < 0$$

Cela permet que le courant $i_{L1}$ augmente de $-I_1$ à $I_1$ dans l'intervalle. En négligeant la résistance $R_1$ en série avec l'inductance de fuite au port 1, le courant $i_{L1}$ s'exprime selon la relation R2 suivante:

$$i_{L1}(t) = -\frac{v_x}{L_1} t - I_1 = \frac{L_b . V_2 . \frac{n_1}{n_2} + L_c . V_3 . \frac{n_1}{n_3}}{L_1} t - I_1$$

Où:

- $I_1$ est la valeur du courant d'entrée $i_1$ du port de courant 20 au point de fonctionnement choisi.

Ce courant est considéré constant à chaque point de fonctionnement puisqu'il est limité par l'inductance $L_f$, qui est une valeur bien plus grande que la valeur de l'inductance $L_1$.

Lorsque $i_{L1}$ se rapproche de la valeur $I_1$, le courant commence à passer plus à travers les diodes $D_1$ et $D_4$ et moins à travers les diodes $D_2$ et $D_3$.

A $t = t_0$, les diodes $D_2$ et $D_3$ passent dans l'état bloqué.

Le deuxième intervalle de temps rassemble les instants $t$ tels que $t_0 \leq t \leq \frac{T_s}{2}$.

Pendant cet intervalle de temps, le courant d'entrée $I_1$ passe à travers $T_1$, $T_4$, $D_1$ et $D_4$ et $i_{L1} = I_1$. Les interrupteurs $T_2$ et $T_3$ passent dans l'état bloqué entre $t_0$ et $t_1$ à courant nul (aussi désigné par l'acronyme ZCS renvoyant à la dénomination anglaise de « Zero Current Switching » signifiant littéralement « commutation à courant nul »). La commutation des ponts de tension 22 et 24 est ensuite mise en œuvre pour assurer que le courant $i_{L1}$ du transformateur 26 bascule dans le prochain intervalle de temps.

A $t = t_1$, le pont en H 38 du port de tension 2 bascule et $v_2' = V_2.\frac{n_1}{n_2}$ .

At $t = t_2$, le pont en H 40 du port de tension 3 bascule et $v_3' = V_3.\frac{n_1}{n_3}$ .

Idéalement, cela n'impacte pas la valeur du courant $i_{L1}$ puisqu'elle est imposée par la source de courant 26 ($L_f \gg L_1$).

Dans ce modèle, le cas idéal est considéré. En conséquence, il est fait l'approximation que le courant $i_{L1}$ est parfaitement trapézoïdal et que la résistance $R_1$ est négligeable, ce qui amène à l'expression suivante pour la tension AC au port 1 :

$$v_1 = v_x = \frac{L_b.v_2' + L_c.v_3'}{(1 - L_a)} > 0$$

Le troisième intervalle de temps rassemble les instants $t$ tels que $\frac{T_s}{2} \leq t \leq t_3$ .

A l'instant $t = \frac{T_s}{2}$ , les interrupteurs $T_2$ et $T_3$ sont mis dans l'état passant à courant nul. De ce fait, tous les interrupteurs du port de courant 20 sont à nouveau dans l'état passant et la tension $v_1 = 0$. La tension au point étoile devient $v_x = L_b.v_2' + L_c.v_3' > 0$, avec $v_2' = V_2.\frac{n_1}{n_2}$ et $v_3' = V_3.\frac{n_1}{n_3}$. Le courant $i_{L1}$ décroît depuis $I_1$ vers $-I_1$ et vérifie la relation R3 suivante:

$$i_{L1}(t) = \frac{-v_x}{L_1}\left(t - \frac{T_s}{2}\right) + I_1 = -\frac{\left(L_b.V_2.\frac{n_1}{n_2} + L_c.V_3.\frac{n_1}{n_3}\right)}{L_1}\left(t - \frac{T_s}{2}\right) + I_1$$

A l'instant $t = t_3$, les diodes $D_1$ et $D_4$ sont dans l'état bloqué.
Le quatrième intervalle de temps rassemble les instants $t$ tels que $t_3 \leq t \leq T_s$.
Le courant d'entrée passe entièrement à travers $T_2$, $T_3$, $D_2$ et $D_3$ dans cet intervalle de temps et $i_{L1} = -I_1$.
A l'instant $t = t_4$, les interrupteurs $T_1$ et $T_4$ sont mis dans l'état passant à courant nul.

Aux instants $t = t_5$ et $t = t_6$, les ports de tensions 2 et 3 sont respectivement commutés et $v_2' = -V_2.\frac{n_1}{n_2}$ et $v_3' = -V_3.\frac{n_1}{n_3}$ .

La tension AC au port 1 s'écrit :

$$v_1 = v_x = \frac{L_b.v_2' + L_c.v_3'}{(1 - L_a)} < 0$$

Ce cycle est ensuite répété pour chaque période de commutation $T_s$.

*1.3 - Conditions de fonctionnement*

Pour que le transfert de puissance entre les ports se fassent avec une commutation douce sur toute la gamme de fonctionnement pour tous les ponts, tout en empêchant les surtensions au port 1, trois conditions principales sont à vérifier.
Pour éviter les surtensions et avoir une commutation douce au niveau du port 1, les interrupteurs ne devraient pas être dans l'état bloqué avant le renversement complet du courant du transformateur $i_{L1}$ et le blocage des diodes en série. Sinon, ces interrupteurs bloqueraient une partie importante du courant dans la partie inductive, ce qui causerait une surtension brutale au port 1.
Une telle condition peut donc s'écrire comme suit :

$$t_4 \geq t_3 \rightarrow D_1 T_s \geq \frac{T_s}{2} + t_0$$

Où $t_0 = \frac{2L_1 I_1}{\left(L_b.V_2.\frac{n_1}{n_2}+L_c.V_3.\frac{n_1}{n_3}\right)}$ en référence à la relation R2.

Il en résulte une relation R4 :

$$D_1 \geq \frac{2L_1 I_1}{\left(L_b.V_2.\frac{n_1}{n_2} + L_c.V_3.\frac{n_1}{n_3}\right).T_s} + \frac{1}{2}$$

Les tensions AC aux ports de tension $v_2$' et $v_3$' devraient être renversées après le renversement complet du courant $i_{L1}$ et le blocage des diodes et des interrupteurs associés pour le port 1.

Si $v_2$ et/ou $v_3$ sont renversées avant, the courant $i_{L1}$ ne pourra peut-être pas se renverser, de sorte qu'aucune puissance ne peut être échangée entre les ports. De plus, si les tensions $v_2$ et/ou $v_3$ sont renversées entre le blocage des diodes et de l'interrupteur associé, les diodes pourront passer à nouveau dans l'état passant, causant ainsi des surtensions au port 1. Cette condition assure aussi une commutation douce sur les ports de tension et les conditions associées peuvent s'écrire :

$$t_5 \geq t_4 \rightarrow \frac{D_1 T_s}{2} + \varphi_2 \frac{T_s}{2\pi} + \frac{T_s}{4} \geq D_1 T_s$$

et

$$t_6 \geq t_4 \rightarrow \frac{D_1 T_s}{2} + \varphi_3 \frac{T_s}{2\pi} + \frac{T_s}{4} \geq D_1 T_s$$

Il en résulte les deux conditions correspondant aux relations R5 et R6 suivantes :

$$\varphi_2 \geq \pi.\left(D_1 - \frac{1}{2}\right)$$

et

$$\varphi_3 \geq \pi.\left(D_1 - \frac{1}{2}\right)$$

Il peut être déduit des relations R2 et R3 que la pente du courant $i_{L1}$ pendant son reversement est proportionnelle à $-v_x = -(L_b. v_2' + L_c. v_3')$.

Ainsi, the renversement de ce courant est garanti si à la fois les tensions AC des ports 2 et 3 ont le même signe (à la fois négatif pour une pente positive et positif pour une pente négative).

De plus, la pente du courant $i_{L1}$ sera maximisée de cette manière. Ainsi, les conditions R5 et R6 seront toujours respectées simultanément.

Il apparaît ainsi que ces conditions dépendent sur le point de fonctionnement du convertisseur 10 du fait que $I_1$, $V_3$, $D_1$, $\varphi_2$ et $\varphi_3$ varient selon la puissance désirée, rendant le contrôle de cette topologie complexe.

*1.4 - Modèle moyen généralisé du convertisseur 10*

Les équations d'état du système étudié sont le système correspondant à la relation R7 suivante :

$$\begin{cases} L_{\mathrm{f}}\dfrac{di_1}{dt} = V_1 - V_{dc,1} - R_{\mathrm{f}}.i_1 \\[2mm] C_3\dfrac{dV_3}{dt} = -\dfrac{V_3}{R_{L3}} + S_3.i_{13}.\dfrac{n_1}{n_3} + S_3.i_{23}.\dfrac{n_1}{n_3} \\[2mm] L_{12}\dfrac{di_{12}}{dt} = v_1 - \dfrac{n_1}{n_2}S_2.V_2 - R_{12}.i_{12} \\[2mm] L_{13}\dfrac{di_{13}}{dt} = v_1 - \dfrac{n_1}{n_3}S_3.V_3 - R_{13}.i_{13} \\[2mm] L_{23}\dfrac{di_{23}}{dt} = \dfrac{n_1}{n_2}S_2.V_2 - \dfrac{n_1}{n_3}S_3.V_3 - R_{23}.i_{23} \end{cases}$$

Où:

- 

$$V_{dc,1} = \begin{cases} v_1 & pour\ 0 \le t \le \frac{T_s}{2} \\ -v_1 & pour\ \frac{T_s}{2} \le t \le T_s \end{cases},$$

- 

$$S_2(t) = \begin{cases} 1 & pour\ \ t_1 \le t < t_5 \\ -1 & pour\ \ 0 \le t < t_1\ et\ t_5 \le t < T_s \end{cases},$$

et

- 

$$S_3(t) = \begin{cases} 1 & pour\ \ t_2 \le t < t_6 \\ -1 & pour\ \ 0 \le t < t_2\ et\ t_6 \le t < T_s \end{cases}.$$

Le modèle moyen usuellement utilisé pour les circuits électroniques de puissance prend en compte les valeurs moyennes des variables d'état pour transformer ce modèle discret en un modèle continu. Ce modèle de moyennage ne peut être implémenté pour un convertisseur 10 comme il résulte en un courant de transformateur nul (puisqu'il s'agit d'une variable de type AC).

Par conséquent, le modèle moyen généralisé de ce système est développé pour l'étudier comme un modèle continu tout en représentant les signaux AC avec une meilleure précision que le modèle moyen classique.

Ainsi, les signaux DC sont représentés par des valeurs moyennes (coefficient d'ordre 0 des séries de Fourier) et les signaux AC sont représentés par leurs fondamentaux (coefficient d'ordre 1 des séries de Fourier).

Le k-ième coefficient des séries de Fourier d'une variable x est dénoté $\langle x \rangle_k$ et il est complexe et vérifié la relation R8 suivante :

$$\langle x \rangle_k = \langle x \rangle_{kR} + j\langle x \rangle_{kI}$$

Le modèle de grands signaux du système peut ainsi être dérivé de la relation 7 pour obtenir le système correspondant à la relation R9 suivante :

$$\begin{cases} \dfrac{d\langle i_1\rangle_0}{dt} = \dfrac{V_1}{L_f} - \dfrac{\langle V_{dc,1}\rangle_0}{L_f} - \dfrac{R_f}{L_f}\cdot\langle i_1\rangle_0 \\[2ex] \dfrac{d\langle V_3\rangle_0}{dt} = -\dfrac{\langle V_3\rangle_0}{C_3 R_{L3}} + \dfrac{2}{C_3}\cdot\dfrac{n_1}{n_3}\cdot\langle S_3\rangle_{1R}\cdot\langle i_{13}\rangle_{1R} + \dfrac{2}{C_3}\cdot\dfrac{n_1}{n_3}\cdot\langle S_3\rangle_{1I}\cdot\langle i_{13}\rangle_{1I} \\[2ex] \qquad\qquad + \dfrac{2}{C_3}\cdot\dfrac{n_1}{n_3}\cdot\langle S_3\rangle_{1R}\cdot\langle i_{23}\rangle_{1R} + \dfrac{2}{C_3}\cdot\dfrac{n_1}{n_3}\cdot\langle S_3\rangle_{1I}\cdot\langle i_{23}\rangle_{1I} \\[2ex] \dfrac{d\langle i_{12}\rangle_{1R}}{dt} = -\dfrac{R_{12}}{L_{12}}\cdot\langle i_{12}\rangle_{1R} + \omega_s\cdot\langle i_{12}\rangle_{1I} + \dfrac{\langle v_1\rangle_{1R}}{L_{12}} - \dfrac{n_1}{n_2}\dfrac{\langle S_2\rangle_{1R}}{L_{12}}\cdot V_2 \\[2ex] \dfrac{d\langle i_{12}\rangle_{1I}}{dt} = -\omega_s\cdot\langle i_{12}\rangle_{1R} - \dfrac{R_{12}}{L_{12}}\cdot\langle i_{12}\rangle_{1I} + \dfrac{\langle v_1\rangle_{1I}}{L_{12}} - \dfrac{n_1}{n_2}\dfrac{\langle S_2\rangle_{1I}}{L_{12}}\cdot V_2 \\[2ex] \dfrac{d\langle i_{13}\rangle_{1R}}{dt} = -\dfrac{R_{13}}{L_{13}}\cdot\langle i_{13}\rangle_{1R} + \omega_s\cdot\langle i_{13}\rangle_{1I} + \dfrac{\langle v_1\rangle_{1R}}{L_{13}} - \dfrac{n_1}{n_3}\dfrac{\langle S_3\rangle_{1R}}{L_{13}}\cdot\langle V_3\rangle_0 \\[2ex] \dfrac{d\langle i_{13}\rangle_{1I}}{dt} = -\omega_s\cdot\langle i_{13}\rangle_{1R} - \dfrac{R_{13}}{L_{13}}\cdot\langle i_{13}\rangle_{1I} + \dfrac{\langle v_1\rangle_{1I}}{L_{13}} - \dfrac{n_1}{n_3}\dfrac{\langle S_3\rangle_{1I}}{L_{13}}\cdot\langle V_3\rangle_0 \\[2ex] \dfrac{d\langle i_{23}\rangle_{1R}}{dt} = -\dfrac{R_{23}}{L_{23}}\cdot\langle i_{23}\rangle_{1R} + \omega_s\cdot\langle i_{23}\rangle_{1I} + \dfrac{n_1}{n_2}\dfrac{\langle S_2\rangle_{1R}}{L_{23}}\cdot V_2 - \dfrac{n_1}{n_3}\dfrac{\langle S_3\rangle_{1R}}{L_{23}}\cdot\langle V_3\rangle_0 \\[2ex] \dfrac{d\langle i_{23}\rangle_{1I}}{dt} = -\omega_s\cdot\langle i_{23}\rangle_{1R} - \dfrac{R_{23}}{L_{23}}\cdot\langle i_{23}\rangle_{1I} + \dfrac{n_1}{n_2}\dfrac{\langle S_2\rangle_{1I}}{L_{23}}\cdot V_2 - \dfrac{n_1}{n_3}\dfrac{\langle S_3\rangle_{1I}}{L_{23}}\cdot\langle V_3\rangle_0 \end{cases}$$

Où:

- l'indice R désigne la partie réelle d'un nombre complexe,

- l'indice I désigne la partie imaginaire d'un nombre complexe,

- 

$$\langle S_2\rangle_0 = \langle S_3\rangle_0 = 0,$$

- 

$$\langle S_2\rangle_{1R} = \frac{2}{\pi}cos(D_1\pi + \varphi_2),$$

- 

$$\langle S_2\rangle_{1I} = -\frac{2}{\pi}sin(D_1\pi + \varphi_2),$$

- 

$$\langle S_3\rangle_{1R} = \frac{2}{\pi}cos(D_1\pi + \varphi_3),$$

- 

$$\langle S_3\rangle_{1I} = -\frac{2}{\pi}sin(D_1\pi + \varphi_3),$$

-

$$\langle v_1 \rangle_{1R} = \frac{1}{\pi} \cdot \left( \frac{2L_b}{(1-L_a)} \cdot \frac{n_1}{n_2} \cdot V_2 \cdot \cos(D_1\pi + \varphi_2) + \frac{2L_c}{(1-L_a)} \cdot \frac{n_1}{n_3} \cdot \langle V_3 \rangle_0 \cdot \cos(D_1\pi + \varphi_3) + \right.$$

$$\left. \left( L_b \cdot V_2 \cdot \frac{n_1}{n_2} + L_c \cdot \langle V_3 \rangle_0 \cdot \frac{n_1}{n_3} \right) \cdot \frac{\sin(\omega_s t_0)}{(1-L_a)} \right),$$

•

$$\langle v_1 \rangle_{1I} = \frac{1}{\pi} \cdot \left( \frac{-2L_b}{(1-L_a)} \cdot \frac{n_1}{n_2} \cdot V_2 \cdot \sin(D_1\pi + \varphi_2) - \frac{2L_c}{(1-L_a)} \cdot \frac{n_1}{n_3} \cdot \langle V_3 \rangle_0 \cdot \sin(D_1\pi + \varphi_3) + \right.$$

$$\left. \left( L_b \cdot V_2 \cdot \frac{n_1}{n_2} + L_c \cdot \langle V_3 \rangle_0 \cdot \frac{n_1}{n_3} \right) \cdot \frac{\cos(\omega_s t_0)}{(1-L_a)} - \left( L_b \cdot V_2 \cdot \frac{n_1}{n_2} + L_c \cdot \langle V_3 \rangle_0 \cdot \frac{n_1}{n_3} \right) \cdot \frac{1}{(1-L_a)} \right),$$

et

•

$$\langle V_{dc,1} \rangle_0 = -2 \cdot \left( L_b \cdot V_2 \cdot \frac{n_1}{n_2} + L_c \cdot \langle V_3 \rangle_0 \cdot \frac{n_1}{n_3} \right) \cdot \frac{D_1}{(1-L_a)} + 2 \cdot \left( L_b \cdot V_2 \cdot \frac{n_1}{n_2} + \right.$$

$$\left. L_c \cdot \langle V_3 \rangle_0 \cdot \frac{n_1}{n_3} \right) \cdot \frac{1}{(1-L_a)} - \frac{2L_b}{(1-L_a)} \cdot \frac{n_1}{n_2} \cdot V_2 \cdot \frac{\varphi_2}{\pi} - \frac{2L_c}{(1-L_a)} \cdot \frac{n_1}{n_3} \cdot \langle V_3 \rangle_0 \cdot \frac{\varphi_3}{\pi} + \frac{4L_1}{(1-L_a) \cdot T_s} \cdot \langle i_1 \rangle_0.$$

Le modèle de grands signaux peut être représenté sous forme matricielle avec :

$$\dot{X} = A \cdot X + B \cdot U$$

où :

- $X = [\langle i_1 \rangle_0 \ \langle V_3 \rangle_0 \ \langle i_{12} \rangle_{1R} \ \langle i_{12} \rangle_{1I} \ \langle i_{13} \rangle_{1R} \ \langle i_{13} \rangle_{1I} \ \langle i_{23} \rangle_{1R} \ \langle i_{23} \rangle_{1I}]^T$, et
- $U = [V_1 \ V_2]^T$.

Les paramètres d'entrée du contrôle du système sont le rapport cyclique $D_1$ et les déphasages $\varphi_2$ et $\varphi_3$.

Les paramètres de sortie du contrôle du système sont $\langle i_1 \rangle_0$ et $\langle V_3 \rangle_0$.

De ce fait, les équations moyennes obtenues sont non linéaires.

Une linéarisation est à effectuer au point de fonctionnement pour pouvoir utiliser des contrôleurs linéaires classiques.

Le modèle petit signaux de ce système est obtenu en introduisant des petites perturbations dans les variables du système au point de fonctionnement et en utilisant un développement en série de Taylor, de sorte que :

$$\langle x \rangle = x_{eq} + \widehat{\langle x \rangle}$$

Où:

- les variables surmontées par symbole " ^ " représentent les petits signaux associés (perturbations autour du point de fonctionnement), et
- $x_{eq}$ désigne la valeur de $\langle x \rangle$ au point de fonctionnement qui est parfois aussi dénommé le point d'équilibre.

Les perturbations des sources de tension autour des valeurs moyennes peuvent être négligées dans cet étude ($\widehat{V_1} = \widehat{V_2} = 0$).

Cela est principalement dû à leur variation lente comparée à la dynamique rapide du contrôle (par exemple, la tension du panneau photovoltaïque, le système de batterie ou le réseau électrique). Le modèle mathématique linéarisé obtenu a un ordre de 8.

### 1.5 - Modèle d'ordre réduit du convertisseur 10

Le modèle d'ordre réduit d'un système est un modèle simplifié qui peut plus aisément être utilisé et utilisé dans les simulations. En outre, cela rend la conception des contrôleurs du système bien plus simple.

En conséquence, il sera possible de recalculer les contrôleurs du système en temps réel quand un changement du point de fonctionnement a lieu. Cependant, le principal inconvénient de la réduction d'ordre est une précision moindre pour le modèle mathématique.

La modélisation moyenne à ordre réduit s'appuie sur la séparation des dynamiques du système dans le domaine fréquentiel en deux parties: les dynamiques à basse fréquence (variables lentes) et les dynamiques à haute fréquence (variables rapides).

Après cette séparation, seule la dynamique dominante du système est prise en compte pour l'étude du comportement du système.

Pour le convertisseur 10, les variables DC peuvent être considérées comme les variables lentes et les variables AC comme les variables rapides. Dans ce cas, les variables lentes représentent les paramètres d'entrée et de sortie du système, alors que les variables rapides représentent le fonctionnement interne du convertisseur 10.

Puisque le but du contrôle du convertisseur 10 est de réguler les paramètres d'entrée et de sortie, les dynamiques à basse fréquence dominantes sont conservées et les dynamiques rapides sont ignorées dans le modèle d'ordre réduit.

Les deux sous-systèmes peuvent ainsi être représentés comme suit, en séparant le vecteur d'état X du système non-réduit en deux parties :

$$X = \begin{bmatrix} X_s \, X_f \end{bmatrix}^T$$

où :

- l'indice « s » désigne le sous-système à dynamique lente,
- l'indice « f » désigne le sous-système à dynamique rapide,
- $X_s = [\langle i_1 \rangle_0 \; \langle V_3 \rangle_0]^T$, et
- $X_f = [\langle i_{12} \rangle_{1R} \; \langle i_{12} \rangle_{1I} \; \langle i_{13} \rangle_{1R} \; \langle i_{13} \rangle_{1I} \; \langle i_{23} \rangle_{1R} \; \langle i_{23} \rangle_{1I}]^T$

Ainsi, le système de la relation R9 devient :

$$\dot{X} = A.X + B.U \rightarrow \begin{cases} \dot{X}_s = A_{ss}.X_s + A_{sf}.X_f + B_s.U \\ \dot{X}_f = A_{fs}.X_s + A_{ff}.X_f + B_f.U \end{cases}$$

où:

- Les matrices $A_{ss}$, $A_{sf}$, $A_{fs}$ et $A_{ff}$ sont des parties de la matrice A désignée avant, $A_{ss}$ étant la matrice de gain entre les variables $\dot{X}_s$ et $X_s$, $A_{sf}$ la matrice de gain entre les variables $\dot{X}_s$ et $X_f$, $A_{fs}$ la matrice de gain entre les variables $\dot{X}_f$ et $X_s$ et $A_{ff}$ la matrice de gain entre les variables $\dot{X}_f$ et $X_f$, et
- $B_s$ et $B_f$ sont des parties de la matrice B liant $\dot{X}_s$ et $\dot{X}_f$ à la matrice des entrées U.

Les matrices $A_{ss}$, $A_{sf}$, $A_{fs}$, $A_{ff}$, $B_s$ et $B_f$ sont obtenues à l'aide d'un réarrangement des matrices $A$ et $B$.

Pour obtenir le modèle d'ordre réduit, le sous-système à dynamique rapide est d'abord résolu à un point de fonctionnement (point d'équilibre) choisi ($\dot{X}_{f,eq} = 0$), en considérant que les variables lentes sont constantes et égales à leur valeurs moyennes, c'est-à-dire que :

$$X_s = X_{s,eq},$$

de sorte que $\langle i_1 \rangle_0 = I_{1,eq}$ et $\langle V_3 \rangle_0 = V_{3,eq}$

La réponse moyenne $X_{f,eq}$ du sous-système à dynamique rapide est ainsi obtenu.

Après, pour le sous-système à dynamique lente, les variables rapides sont remplacées par la réponse moyenne calculée précédemment. Il vient ainsi $X_f = X_{f,eq}$.

Le sous-système à dynamique lente est ensuite linéarisé autour du point de fonctionnement choisi tout en ignorant la dynamique des variables rapides. Cela donne un modèle linéarisé d'ordre réduit du convertisseur 10, dont l'expression est donnée par une relation R10 correspondant au système à deux équations suivants :

$$
\begin{cases}
\dfrac{d\langle \widehat{i_1}\rangle_0}{dt} = \left(-\dfrac{R_f}{L_f} - \dfrac{4L_1}{L_f.(1-L_a).T_s}\right)\cdot\langle \widehat{i_1}\rangle_0 + \dfrac{2L_c}{L_f.(1-L_a)}\cdot\dfrac{n_1}{n_3}\left(D_{1,eq} - 1 + \dfrac{\varphi_{3,eq}}{\pi}\right)\cdot\langle \widehat{V}_3\rangle_0 \\
\qquad + \left(\dfrac{2L_b}{L_f.(1-L_a)}\cdot\dfrac{n_1}{n_2}\cdot V_2 + \dfrac{2L_c}{L_f.(1-L_a)}\cdot\dfrac{n_1}{n_3}\cdot V_{3,eq}\right)\cdot\widehat{D}_1 + \dfrac{2L_b}{L_f.(1-L_a)}\cdot\dfrac{n_1}{n_2}\cdot V_2\cdot\dfrac{\widehat{\varphi}_2}{\pi} \\
\qquad\qquad + \dfrac{2L_c}{L_f.(1-L_a)}\cdot\dfrac{n_1}{n_3}\cdot V_{3,eq}\cdot\dfrac{\widehat{\varphi}_3}{\pi} \\[4pt]
\dfrac{d\langle \widehat{V}_3\rangle_0}{dt} = -\dfrac{\langle \widehat{V}_3\rangle_0}{C_3 R_{L3}} - \dfrac{4}{C_3}\cdot\dfrac{n_1}{n_3}\cdot\Big[I_{13,R,eq}\cdot\sin\left(D_{1,eq}.\pi + \varphi_{3,eq}\right) + I_{13,I,eq}\cdot\cos\left(D_{1,eq}.\pi + \varphi_{3,eq}\right) \\
\qquad + I_{23,R,eq}\cdot\sin\left(D_{1,eq}.\pi + \varphi_{3,eq}\right) + I_{23,I,eq}\cdot\cos\left(D_{1,eq}.\pi + \varphi_{3,eq}\right)\Big]\cdot\widehat{D}_1 \\
\qquad - \dfrac{4}{\pi C_3}\cdot\dfrac{n_1}{n_3}\cdot\Big[I_{13,R,eq}\cdot\sin\left(D_{1,eq}.\pi + \varphi_{3,eq}\right) + I_{13,I,eq}\cdot\cos\left(D_{1,eq}.\pi + \varphi_{3,eq}\right) \\
\qquad + I_{23,R,eq}\cdot\sin\left(D_{1,eq}.\pi + \varphi_{3,eq}\right) + + I_{23,I,eq}\cdot\cos\left(D_{1,eq}.\pi + \varphi_{3,eq}\right)\Big]\cdot\widehat{\varphi}_3
\end{cases}
$$

Il apparaît ainsi que l'ordre du modèle mathématique a été réduit de 8 à 2 en utilisant la technique de modélisation à ordre réduit. Cela rend plus simple l'analyse du comportement dynamique et la conception du contrôle du convertisseur 10.

L'application de la transformée de Laplace au modèle de la relation R10 conduit à une fonction de transfert réduite liant d'une part le courant d'entrée $I_1$ du port 1 au rapport cyclique $D_1$ par une première fonction de transfert $G_{i1_r}$ et d'autre part la tension DC de sortie $V_3$ du port 3 au déphasage $\varphi_3$ par une deuxième fonction de transfert $G_{V3_r}(s)$.

La première fonction de transfert $G_{i1_r}$ s'exprime selon la relation R11 suivante :

$$
G_{i1_r}(s) = \dfrac{I_1(s)}{D_1(s)}\bigg|_{\substack{\widehat{\varphi}_2 = 0 \\ \widehat{\varphi}_3 = 0}} = \dfrac{a.s + b}{(s + c)(s + d)}
$$

Où :

- 

$$
a = \dfrac{2L_b}{L_f.(1-L_a)}\cdot\dfrac{n_1}{n_2}\cdot V_2 + \dfrac{2L_c}{L_f.(1-L_a)}\cdot\dfrac{n_1}{n_3}\cdot V_{3,\text{eq}},
$$

- 

$$
b = \dfrac{a}{C_3 R_{L3}} - \dfrac{8}{C_3}\cdot\dfrac{L_c}{L_f.(1-L_a)}\cdot\left(\dfrac{n_1}{n_3}\right)^2\cdot\left(D_{1,eq} - 1 + \dfrac{\varphi_{3,eq}}{\pi}\right)\cdot\big(I_{13,R,eq}\cdot\sin(D_{1,eq}.\pi + \\
\varphi_{3,eq}) + I_{13,I,eq}\cdot\cos(D_{1,eq}.\pi + \varphi_{3,eq}) + I_{23,R,eq}\cdot\sin(D_{1,eq}.\pi + \varphi_{3,eq}) + \\
I_{23,I,eq}\cdot\cos(D_{1,eq}.\pi + \varphi_{3,eq})\big),
$$

et

- 

$$
c = \dfrac{R_f}{L_f} + \dfrac{4L_1}{L_f.(1-L_a).T_s}.
$$

Cette expression de la première fonction de transfert $G_{i1_r}$ peut encore être simplifiée en ignorant la dynamique de la tension $V_3$, c'est-à-dire en considérant que cette valeur $V_3$ ne varie pas beaucoup autour de sa valeur nominale. Il est ainsi obtenu une première fonction de transfert réduit d'ordre 1 correspondant à la relation R12 suivante :

$$G_{i1_{r2}}(s) = \frac{I_1(s)}{D_1(s)}\bigg|_{\substack{\widehat{\varphi}_2=0 \\ \widehat{\varphi}_3=0 \\ \widehat{V}_3=0}} = \frac{a}{(s+c)}$$

La deuxième fonction de transfert $G_{V3r}$ s'exprime selon la relation R13 suivante :

$$G_{v3_r}(s) = \frac{V_3(s)}{\varphi_3(s)}\bigg|_{\substack{\widehat{\varphi}_2=0 \\ \widehat{D}_1=0}} = \frac{e}{(s+d)}$$

Où :

- 

$$d = \frac{1}{C_3 R_{L3}},$$

et

- 

$$e = \frac{4}{\pi C_3}\cdot\frac{n_1}{n_3}\cdot\left(I_{13,R,eq}.\sin\left(D_{1,eq}.\pi + \varphi_{3,eq}\right) + I_{13,I,eq}.\cos\left(D_{1,eq}.\pi + \varphi_{3,eq}\right) + \right.$$

$$\left. I_{23,R,eq}.\sin\left(D_{1,eq}.\pi + \varphi_{3,eq}\right) + I_{23,I,eq}.\cos\left(D_{1,eq}.\pi + \varphi_{3,eq}\right)\right)$$

L'ordre des première et deuxième fonctions de transfert réduites $G_{V3r}$ et $G_{i1_{r2}}$ est indépendant du nombre de ports du convertisseur 10 .

Ainsi, le modèle d'ordre réduit qui vient d'être décrit pour un convertisseur 10 à alimentation hybride peut être généralisé à un convertisseur 10 MAB à n-ports, 1 port étant un port à alimentation en courant tandis que les (n-1) autres sont des ports à alimentation en tension.

Ces première et deuxième fonctions de transfert réduites sont alors encore du premièr ordre indépendamment du nombre de port du convertisseur 10 MAB, de sorte que les tensions des ports d'alimentation en tension ne varient pas beaucoup autour des valeurs moyennes à un certain point de fonctionnement.

Ces modèles d'ordre réduits peuvent être utilisés pour l'analyse du convertisseur 10 et pour concevoir les contrôleurs en boucle fermée.

### 1.6 - Stratégie de contrôle

Deux paramètres sont à contrôler dans ce système (les paramètres de contrôle de sortie), à savoir le courant DC d'entrée du port 1 et la tension DC de sortie $V_3$ du port 3.

Cependant, les paramètres de contrôle d'entrée sont au nombre de trois et sont le rapport cyclique $D_1$ et les déphasages $\varphi_2$ et $\varphi_3$.

Ainsi, à un point de fonctionnement choisi, il y a une combinaison infinie de valeurs pour les paramètres de contrôle d'entrée qui peut donner les valeurs désirées en respectant les relations R4 à R6. On nommera les éléments d'une telle combinaison $D_{1,eq}$, $\varphi_{2,eq}$ et $\varphi_{3,eq}$ pour les paramètres de contrôle d'entrée et $I_{1,eq}$ et $V_{3,eq}$ pour les paramètres de contrôle de sortie.

De plus, à partir du système R9, il peut être noté que les paramètres de contrôle de sortie $I_{1,eq}$ et $V_{3,eq}$ dépendent de tous les paramètres de contrôle d'entrée $D_{1,eq}$, $\varphi_{2,eq}$ et $\varphi_{3,eq}$. Cela montre que la structure de convertisseur 10 étudiée est couplée et qu'un changement d'une des variables de contrôle a un effet sur tous les ports.

Une manière de contrôler un convertisseur 10 est de rendre $D_{1,eq}$ égal à une valeur minimale autorisée $D_{1,min}$ dans la relation R4 avec une marge de sécurité $\varepsilon$ à chaque point de fonctionnement. Il vient ainsi :

$$D_{1,eq} = D_{1,min} + \epsilon$$

La valeur de $\varepsilon$ peut être choisie arbitrairement, par exemple fixée à 0,01.

Les valeurs correspondantes de $\varphi_{2,eq}$ et $\varphi_{3,eq}$ sont ensuite calculées à partir du système de la relation R9 au point de fonctionnement choisi.

Ensuite, à l'aide des relations R5 et R6, il est obtenu une valeur minimale autorisée pour $\varphi_2$ et $\varphi_3$.

Les valeurs calculées des trois paramètres de contrôle d'entrée sont ensuite envoyés au système.

Ajouter une boucle de rétroaction au contrôle du convertisseur 10 permet de découpler les ports.

Les approximations faites pour développer le modèle mathématique entraîneront une erreur dans l'état permanent si seule la boucle ouverte de contrôle est appliquée.

Un contrôleur PI est donc utilisé pour chacune des boucles de contrôle pour supprimer cette erreur (voir figures 3 et 4). Ces contrôleurs sont calculés sur la base du modèle d'ordre réduit présenté précédemment. Des sous-unités d'ajustement 70 et 90 sont ajoutées pour s'assurer que les conditions R4 à R6 sont toujours satisfaites.

Dans le cas des figures 3 et 4, le maximum autorisé pour la valeur de $D_1$ est noté $D_{1,max}$ et est égal à 1.

Similairement, le maximum autorisé pour les valeurs de $\varphi_2$ et de $\varphi_3$ est noté $\varphi_{max}$ et se calcule comme suit :

$$t_5 \leq T_s \ et \ t_6 \leq T_s \rightarrow \varphi_{\max} = \pi.\left(\frac{3}{2} - D_1\right)$$

La fonction de transfert de la sous-unité de conversion 66 s'exprime ainsi comme suit :

$$C_1(s) = \frac{K_{p1}.(T_{i1}.s + 1)}{T_{i1}.s}$$

En utilisant la première fonction de transfert $G_{i1r2}$ de la relation R12, il est obtenu une fonction de transfert de première ordre.

Il est choisi $T_{i1} = \frac{1}{c}$.

La fonction de transfert en boucle fermée $CLTF_1$ devient ainsi :

$$CLTF_1(s) = \frac{C_1(s)G_{i1}(s)}{1 + C_1(s)G_{i1}(s)} = \frac{K_{p1}.a}{s + K_{p1}.a} = \frac{1}{\tau_1.s + 1}$$

Où :

- $\tau_1 = \frac{1}{K_{p1}.a}$ est la constante de temps du système en boucle fermée.

Or, le temps de réponse de cette fonction de transfert en boucle fermée pour obtenir les 95% du courant de référence est tel que $t_{r1,95\%} = 3.\,\tau_1$.

Le gain $K_{p1}$ est alors choisi pour la valeur désirée de $t_{r1,95\%}$, de sorte que ce gain vérifie :

$$K_{p1} = \frac{3}{a.\,t_{r1,95\%}}$$

Quant à la fonction de transfert de la sous-unité de conversion 86, elle s'exprime comme suit :

$$C_3(s) = \frac{K_{p3}.(T_{i3}.s + 1)}{T_{i3}.s}$$

En utilisant la deuxième fonction de transfert $G_{v3r}$ de la relation R13, il est obtenu une fonction de transfert de première ordre.

Il est choisi $T_{i3} = \frac{1}{d}$.

La fonction de transfert en boucle fermée $CLTF_3$ devient ainsi :

23

$$CLTF_3(s) = \frac{C_3(s)G_{v3}(s)}{1 + C_3(s)G_{v3}(s)} = \frac{K_{p3}.e}{s + K_{p3}.e} = \frac{1}{\tau_3.s + 1}$$

Où :

- $\tau_3 = \frac{1}{K_{p3}.e}$ est la constante de temps du système en boucle fermée.

Or, le temps de réponse de cette fonction de transfert en boucle fermée pour obtenir les 95% de la tension de référence est tel que $t_{r3,95\%} = 3.\tau_3$.
Le gain $K_{p3}$ est alors choisi pour la valeur désirée de $t_{r3,95\%}$, de sorte que ce gain vérifie :

$$K_{p3} = \frac{3}{e.\,t_{r3,95\%}}$$

### 1.6 - Résultats expérimentaux

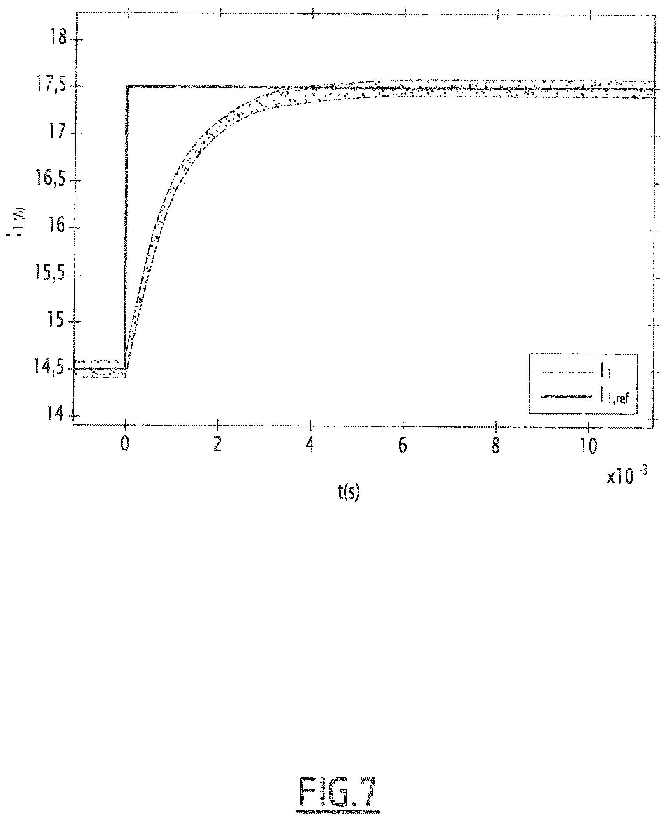

La figure 7 montre les résultats de simulations d'un contrôle en boucle fermée du courant $I_1$.
Les valeurs des paramètres du convertisseur 10 simulé sont données dans le tableau 1 qui suit.

[Table 1]

| Paramètres | Valeur dans la simulation |
|---|---|
| $V_1$ | 200 V |
| $V_2$ | 400 V |
| $f_s$ | 20 KHz |
| $L_f$ | 0,016 H |
| $R_f$ | 10 mΩ |
| $L_1$ | 83 µH |
| $R_1$ | 10 mΩ |
| $L_2$ | 83 µH |
| $R_2$ | 10 mΩ |
| $L_3$ | 230 µH |
| $R_3$ | 10 mΩ |
| $C_3$ | 100 µH |
| $R_{c3}$ | 1 mΩ |
| $L_m$ | 8,3 mH |
| $n_1$ | 100 turns |
| $n_2$ | 83 turns |
| $n_3$ | 124 turns |
| $P_{3,nominal}$ | 3 kW (reçu) |
| $P_{1,nominal}$ | 3.5 kW (délivré) |
| $P_{max}$ (entre deux ports) | 4 kW |
| $R_{L3}$ | 120 Ω |

Le temps de réponse a été choisi pour que les valeurs des paramètres du contrôleur PI1 des relations R14 soient tel que $t_{r1,95\%} = 3ms$.
L'observation de la figure 7 montre que le temps de réponse de la boucle ouverte est effectivement égal à la valeur choisie de 3 ms, ce qui valide le développement du modèle mathématique du contrôleur.

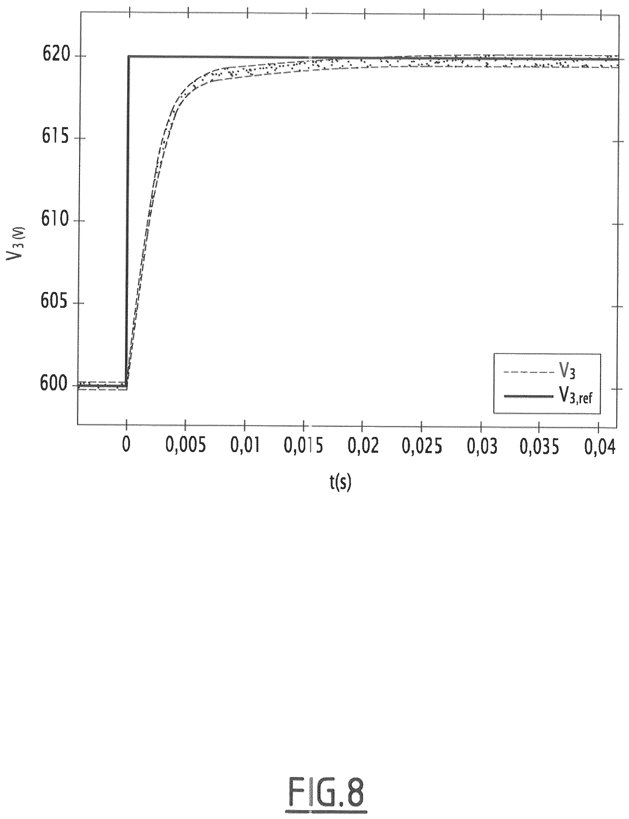

La figure 8 montre les résultats de la même simulation pour le contrôle en boucle fermée de la tension de sortie $V_3$.

Le temps de réponse a été choisi pour que les valeurs des paramètres du contrôleur PI3 des relations R15 soient tel que $t_{r3,95\%} = 10ms.$

L'observation de la figure 8 montre que le temps de réponse de la boucle ouverte est effectivement égal à la valeur choisie de 10 ms, ce qui valide le développement du modèle mathématique du contrôleur.

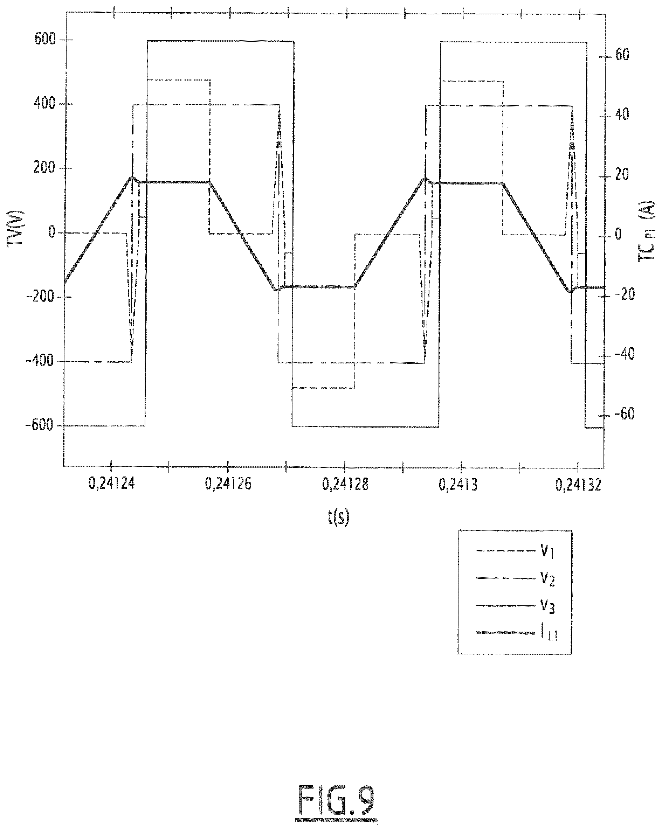

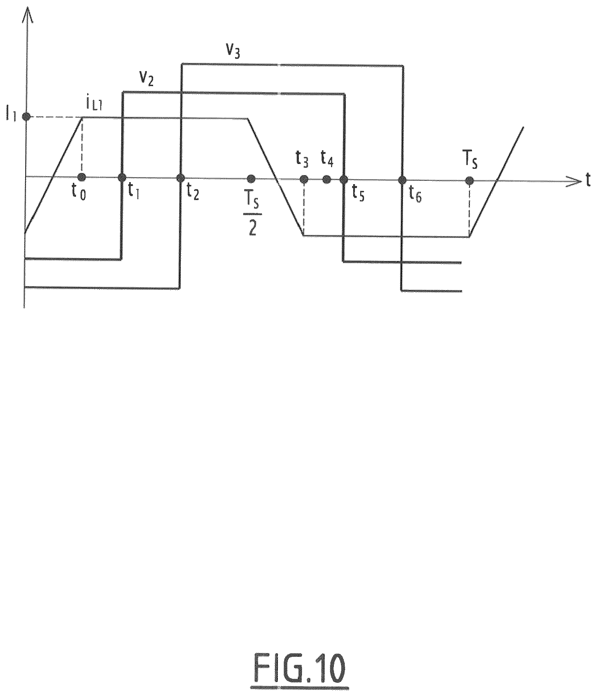

Les figures 9 et 10 présentent l'évolution de chacune des valeurs de tension $v_1$, $v_2$, $v_3$ et $I_{L1}$ respectivement obtenue par simulation et théorique.

La comparaison des deux figures montre bien que les signaux obtenus par simulation sont conformes aux formes théoriques.

L'écart minime entre les caractéristiques choisies pour le calcul des paramètres du contrôleur et les caractéristiques des réponses simulées est due à des hypothèses de simplification qui ont été faites, notamment l'approximation de première harmonique des signaux AC et la réduction d'ordre du modèle.

Pour améliorer la précision du modèle, des harmoniques d'ordre plus grand pourraient être considérée. Toutefois, cela conduit à une complexité du modèle.

Le modèle décrit permet d'obtenir le meilleur compromis entre précision et complexité.

### 2 - AUTRES CAS

Dans la structure du convertisseur 10, le couplage entre les ports 20, 22 et 24 est généré par la présence des inductances des interfaces d'isolation 48, 50 et 52.

Toutefois, l'absence d'une inductance sur l'un des ports est un cas particulier qui peut être régulé avec la même stratégie de régulation.

Dans un tel cas, les fonctions de conversion sans réduction de l'ordre s'écriraient :

$$G_{i1_r}(s) = \frac{2\frac{n_1}{n_2}V_2}{L_f} \Big/ \left(s + \left(\frac{R_f}{L_f} + \frac{4L_1}{L_f T_S}\right)\right)$$

et :

$$G_{v3}(s) = \frac{\frac{4b}{\pi C_3}\left(s + \frac{R_3}{L_3} - \frac{a}{b}w_s\right)}{s^3 + \left(2\frac{R_3}{L_3} + \frac{1}{R_{L3}C_3}\right)s^2 + \left(2\left(\frac{R_3}{L_3}\right)^2 + w_s^2 + 2\frac{R_3}{R_{L3}C_3L_3} + \frac{8}{\pi^2 C_3 L_3}\right)s + \left(\frac{8R_3}{\pi^2 C_3 L_3} + \frac{R_3^2}{R_{L3}C_3 L_3^2} + \frac{w_s^2}{R_{L3}C_3}\right)}$$

- 

$$a = \frac{2}{L_3}\frac{n_3}{n_2}V_2\cos(\varphi_{23}),$$

- 

$$b = -\frac{2}{L_3}\frac{n_3}{n_2}V_2\sin(\varphi_{23}),$$

et
- $\varphi_{23}$ étant le déphasage entre les tensions $V_2$ et $V_3$.

Il peut être noté ici que dans ce cas, seul le port tension qui ne possède pas d'inductance (appelé le port maitre) est soumis aux contraintes de commande imposées par le port courant. Donc le déphasage externe de ce port a des valeurs minimale et maximale permises. Les déphasages externes des autres ports tension peuvent avoir n'importe quelle valeur calculée pour obtenir une valeur désirée de leur tension de sortie DC.

De plus, les sources/charges connectées aux ports peuvent être modifiées. Par exemple, la charge 39 peut être remplacée par une source de tension et le port 3 peut être rendu bidirectionnel.

De même, une charge 39 peut remplacer la source de tension du port 2.

Dans chacun de ces cas, au moins un port de tension connecté à une source de tension stable, dont la valeur moyenne ne varie pas trop au cours du temps.

Un réseau électrique ou une batterie sont des exemples de telle source de tension stable.

Enfin, le modèle mathématique et la stratégie de contrôle proposés dans ce brevet peuvent être généralisés à un convertisseur MAB constitué d'un total de n ports, n étant un entier quelconque et un port étant alimenté en courant.

Dans un tel cas, le convertisseur 10 à multiples ponts actifs comprend le port de courant d'entrée 20 et au moins un port de tension de sortie.

Chaque port de tension de sortie est associé à une unité de commande conforme à l'unité de commande décrite en référence à la figure 4, de sorte que le système de régulation 28 comporte (n-1) unité(s) de commande.

Dans chacun des cas, le convertisseur proposé peut notamment être utilisé dans des applications domestiques ou dans des véhicules électriques.

## Revendications

1. Système de régulation (28) d'un convertisseur (10) à multiples ponts actifs à alimentation hybride, le convertisseur (10) à multiples ponts actifs comprenant :

   - un port de courant d'entrée (20) comprenant un pont de commutateurs en H (30) pour lequel un commutateur de référence ($T_1$) est défini, le commutateur de référence ($T_1$) étant dit premier commutateur de référence ($T_1$) et étant commandé par une première loi de commande ($LC_1$), la première loi de commande ($LC_1$) présentant un premier rapport cyclique ($D_1$),
   - au moins un port de tension de sortie (22, 24) comprenant un pont de commutateurs en H (38, 40) pour lequel un commutateur de référence ($T_{21}$, $T_{31}$) est défini, le commutateur de référence étant dit deuxième commutateur de référence ($T_{21}$, $T_{31}$) et étant commandé par une deuxième loi de commande ($LC_2$, $LC_3$) respective, chaque deuxième loi de commande ($LC_2$, $LC_3$) présentant un deuxième rapport cyclique prédéfini ($D_2$, $D_3$) et un déphasage ($\varphi_2$, $\varphi_3$) par rapport à la première loi de commande ($LC_1$),
   - un transformateur (26) présentant des enroulements (42, 44, 46), chaque enroulement (42, 44, 46) étant relié à un port (20, 22, 24) par une interface d'isolation (48, 50, 52) respective,

   le système de régulation (28) étant propre à réguler le convertisseur (10) à multiples ponts actifs à une consigne, la consigne comprenant une valeur de courant de consigne ($I_{1,ref}$) pour le courant du port de courant (20) et au moins une valeur de tension de consigne ($V_{3,ref}$) pour ledit au moins un port de tension (22, 24), le système de régulation (28) comprenant :

   - une unité de mesure de valeurs mesurées, les valeurs mesurées comprenant le courant ($I_1$) du port de courant (20) et la tension ($V_2$, $V_3$) de chaque port de tension (22, 24),
   - une première unité de commande (56) du premier commutateur de référence ($T_1$), la première unité de commande (56) comprenant :

      - une première sous-unité de calcul (62) d'une première valeur initiale souhaitée ($D_{1,eq}$), la première valeur initiale souhaitée ($D_{1,eq}$) étant une valeur souhaitée pour le premier rapport cyclique ($D_1$) égale à la somme du résultat d'une première fonction de calcul (FC1) appliquée aux valeurs de consigne ($I_{1,ref}$, $V_{1,ref}$) et d'une marge de sécurité ($\varepsilon$),
      - une première sous-unité de détermination (64) de l'écart entre la valeur de courant mesurée ($I_1$) et la valeur de courant de consigne ($I_{1,ref}$), pour obtenir un écart de courant déterminé ($\Delta I_1$),
      - une première sous-unité de correction (66) propre à convertir l'écart de courant déterminé ($\Delta I_1$) en une première valeur correctrice ($\Delta D_1$) pour le premier rapport cyclique ($D_1$) par application d'une première fonction de conversion ($G_{i1r}$),
      - une première sous-unité d'addition (68) de la première valeur initiale souhaitée ($D_{1,eq}$) et de la première valeur correctrice ($\Delta D_1$), pour obtenir une première valeur candidate ($D_{1,c}$),
      - une première sous-unité d'ajustement (70) propre à ajuster la première valeur candidate ($D_{1,c}$) pour obtenir une première valeur à appliquer ($D_{1,a}$) comprise entre deux première valeurs extrêmes ($D_{1,min}$, $D_{1,max}$), la première valeur extrême la plus basse ($D_{1,min}$) étant le résultat de la première fonction de calcul (FC1)

appliquée aux valeurs mesurées ($I_1$, $V_2$, $V_3$),

- une première sous-unité d'application (72) de la première loi de commande ayant comme rapport cyclique la première valeur à appliquer ($D_{1,app}$), et

- pour chaque port de tension (22, 24) ayant une valeur de tension de consigne ($V_{3,ref}$), une deuxième unité de commande (58, 60) du deuxième commutateur ($T_{21}$, $T_{31}$) de référence du port de tension (22, 24) considéré, chaque deuxième unité de commande (58, 60) comprenant :

- une deuxième sous-unité de calcul (82) d'une deuxième valeur initiale souhaitée ($\varphi_{3,eq}$), la deuxième valeur initiale souhaitée ($\varphi_{3,eq}$) étant une valeur souhaitée pour le déphasage ($\varphi_2$, $\varphi_3$) égale au résultat d'une deuxième fonction de calcul (FC2) appliquée à la première valeur initiale souhaitée ($D_{1,eq}$),

- une deuxième sous-unité de détermination (84) de l'écart entre la valeur de tension mesurée ($V_2$, $V_3$) pour le port de tension (22, 24) considéré et la valeur de tension de consigne ($V_{3,ref}$) pour le port de tension considéré (22, 24), pour obtenir un écart de tension déterminé ($\Delta V_3$),

- une deuxième sous-unité de correction (86) propre à convertir l'écart de tension déterminé ($\Delta V_3$) en une deuxième valeur correctrice ($\Delta \varphi_3$) pour le déphasage ($\varphi_2$, $\varphi_3$) par application d'une deuxième fonction de conversion ($G_{v3r}$),

- une deuxième sous-unité d'addition de la deuxième valeur initiale souhaitée ($\varphi_{3,eq}$) et de la deuxième valeur correctrice ($\Delta \varphi_3$), pour obtenir une deuxième valeur candidate ($\varphi_{3,c}$),

- une deuxième sous-unité d'ajustement (90) propre à ajuster la deuxième valeur candidate ($\varphi_{3,c}$) pour obtenir une deuxième valeur à appliquer ($\varphi_{3,app}$) comprise entre deux deuxièmes valeurs extrêmes ($\varphi_{3,min}$, $\varphi_{3,max}$), la deuxième valeur extrême la plus basse ($\varphi_{3,min}$) étant le résultat de la deuxième fonction de calcul (FC2) appliquée à la première valeur initiale souhaitée ($D_{1,eq}$), et

- une deuxième sous-unité d'application (92) de la deuxième loi de commande ayant comme déphasage ($\varphi_2$, $\varphi_3$) la deuxième valeur à appliquer ($\varphi_{3,app}$).

2. Système de régulation selon la revendication 1, dans lequel chaque sous-unité d'ajustement (70, 90) est propre à donner comme valeur à appliquer ($D_{1,app}$, $\varphi_{3,app}$) la valeur candidate ($D_{1,c}$, $\varphi_{3,c}$) inchangée lorsque la valeur candidate ($D_{1,c}$, $\varphi_{3,c}$) est comprise entre les deux valeurs extrêmes ($D_{1,min}$, $D_{1,max}$, $\varphi_{3,min}$, $\varphi_{3,max}$) et sinon la valeur extrême ($D_{1,min}$, $D_{1,max}$, $\varphi_{3,min}$, $\varphi_{3,max}$) la plus proche de la valeur candidate ($D_{1,c}$, $\varphi_{3,c}$) .

3. Système de régulation selon la revendication 1 ou 2, dans lequel la deuxième valeur extrême la plus haute ($\varphi_{3,max}$) est le résultat d'une troisième fonction de calcul (FC3) appliquée à la première valeur initiale souhaitée ($D_{1,eq}$).

4. Système de régulation selon la revendication 3, dans lequel au moins une fonction de calcul parmi la deuxième fonction de calcul (FC2) et la troisième fonction de calcul (FC3) est une fonction affine.

5. Système de régulation selon l'une quelconque des revendications 1 à 4, dans lequel chaque sous-unité de correction (66, 86) est un correcteur proportionnel intégral.

6. Système de régulation selon l'une quelconque des revendications 1 à 5, dans lequel chaque fonction de conversion ($G_{i1r}$, $G_{v3r}$) est une fonction du premier ordre.

7. Système de régulation selon l'une quelconque des revendications 1 à 6, dans lequel chaque pont en H (32, 38, 40) comporte deux points milieux (32M1, 32M2, 38M1, 38M2, 40M1, 40M2) chaque interface d'isolation (48, 50, 52) comportant deux lignes reliant un point milieu (32M1, 32M2, 38M1, 38M2, 40M1, 40M2) respectif avec une extrémité (42E1, 42E2, 44E1, 44E2, 46E1, 46E2) de l'enroulement (42, 44, 46) associé, une des deux lignes comportant une résistance ($R_1$, $R_2$, $R_3$) en série avec une inductance ($L_1$, $L_2$, $L_3$).

8. Système de régulation selon la revendication 7, dans lequel chaque enroulement (42, 44, 46) comporte des spires, la première fonction de conversion ($G_{i1r}$) présentant un gain dépendant des valeurs mesurées pour les tensions ($V_2$, $V_3$), de la deuxième valeur initiale souhaitée ($\varphi_{3,eq}$), du nombre de spires de chaque enroulement (42, 44, 46) et des inductances ($L_1$, $L_2$, $L_3$) des interfaces d'isolation (48, 50, 52).

9. Système de régulation selon la revendication 7 ou 8, dans lequel chaque enroulement (42, 44, 46) comporte des spires, la deuxième fonction de conversion ($G_{v3r}$) présentant un gain dépendant de la valeur de courant mesurée ($I_1$), de la première valeur initiale souhaitée ($D_{1,eq}$), de la deuxième valeur initiale souhaitée ($\varphi_{3,eq}$), du nombre de spires de chaque enroulement (42, 44, 46) et des inductances ($L_1$, $L_2$, $L_3$) des interfaces d'isolation (48, 50, 52).

10. Système de régulation selon l'une quelconque des revendications 7 à 9, dans lequel chaque enroulement (42, 44, 46) comporte des spires, la première fonction de calcul (FC1) dépendant, en outre, du nombre de spires de chaque enroulement (42, 44, 46) et des inductances ($L_1$, $L_2$, $L_3$) des interfaces d'isolation (48, 50, 52).

11. Système de régulation selon l'une quelconque des revendications 1 à 10, dans lequel au moins un port de tension de sortie (22, 24) est un port bidirectionnel.

12. Système de régulation selon l'une quelconque des revendications 1 à 11, dans lequel chaque sous-unité de détermination (64, 84) est un soustracteur.

13. Système de régulation selon l'une quelconque des revendications 1 à 12, dans lequel la marge de sécurité ($\varepsilon$) est une valeur prédéfinie.

14. Convertisseur (10) à multiples ponts actifs à alimentation hybride, le convertisseur (10) à multiples ponts actifs comprenant :

   - un port de courant d'entrée (20) comprenant un pont de commutateurs en H (30) pour lequel un commutateur de référence ($T_1$) est défini et fonctionnant à un courant, le commutateur de référence ($T_1$) étant dit premier commutateur de référence ($T_1$) et étant commandé par une première loi de commande ($LC_1$), la première loi de commande ($LC_1$) présentant un premier rapport cyclique ($D_1$),
   - au moins un port de tension de sortie (22, 24), chaque port de tension (22, 24) comprenant un pont de commutateurs en H (38, 40) pour lequel un commutateur de référence ($T_{21}$, $T_{31}$) est défini, chaque commutateur de référence étant dit deuxième commutateur de référence ($T_{21}$, $T_{31}$) et étant commandé par une deuxième loi de commande ($LC_2$, $LC_3$) respective, chaque deuxième loi de commande ($LC_2$, $LC_3$) présentant un deuxième rapport cyclique prédéfini ($D_2$, $D_3$) et un déphasage ($\varphi_2$, $\varphi_3$) par rapport à la première loi de commande ($LC_1$),
   - un transformateur (26) présentant des enroulements (48, 50, 52), chaque enroulement (48, 50, 52) étant relié à un port (20, 22, 24) par une interface d'isolation (48, 50, 52) respective, et
   - un système de régulation (28) selon l'une quelconque des revendications 1 à 13.

15. Procédé de régulation d'un convertisseur (10) à multiples ponts actifs à alimentation hybride, le convertisseur (10) à multiples ponts actifs comprenant :

   - un port de courant d'entrée (20) comprenant un pont de commutateurs en H (30) pour lequel un commutateur de référence ($T_1$) est défini, le commutateur de référence ($T_1$) étant dit premier commutateur de référence ($T_1$) et étant commandé par une première loi de commande ($LC_1$), la première loi de commande ($LC_1$) présentant un premier rapport cyclique ($D_1$),
   - au moins un port de tension (22, 24) comprenant un pont de commutateurs en H (38, 40) pour lequel un commutateur de référence ($T_{21}$, $T_{31}$) est défini, le commutateur de référence étant dit deuxième commutateur de référence ($T_{21}$, $T_{31}$) et étant commandé par une deuxième loi de commande ($LC_2$, $LC_3$) respective, chaque deuxième loi de commande ($LC_2$, $LC_3$) présentant un deuxième rapport cyclique prédéfini ($D_2$, $D_3$) et un déphasage ($\varphi_2$, $\varphi_3$) par rapport à la première loi de commande ($LC_1$),
   - un transformateur (26) présentant des enroulements (42, 44, 46), chaque enroulement (42, 44, 46) étant relié à un port (20, 22, 24) par une interface d'isolation (48, 50, 52) respective,

   le procédé étant propre à réguler le convertisseur (10) à multiples ponts actifs à une consigne, la consigne comprenant une valeur de courant de consigne ($I_{1,ref}$) pour le courant du port de courant (20) et au moins une valeur de tension de consigne ($V_{3,ref}$) pour l'au moins un port de tension (22, 24), le procédé comprenant les étapes de:

   - mesure de valeurs mesurées, les valeurs mesurées comprenant le courant ($I_1$) du port de courant (20) et la tension ($V_2$, $V_3$) de chaque port de tension (22, 24),
   - commande du premier commutateur de référence ($T_1$), l'étape de commande comprenant :

      - un premier calcul d'une première valeur initiale souhaitée ($D_{1,eq}$), la première valeur initiale souhaitée ($D_{1,eq}$) étant une valeur souhaitée pour le premier rapport cyclique ($D_1$) égale à la somme du résultat d'une première fonction de calcul (FC1) appliquée aux valeurs de consigne ($I_{1,ref}$, $V_{1,ref}$) et d'une marge de sécurité ($\varepsilon$),
      - une première détermination de l'écart entre la valeur de courant mesurée ($I_1$) et la valeur de courant de consigne ($I_{1,ref}$), pour obtenir un écart de courant déterminé ($\Delta I_1$),

- une première correction convertissant l'écart de courant déterminé ($\Delta I_1$) en une première valeur correctrice ($\Delta D_1$) pour le premier rapport cyclique ($D_1$) par application d'une première fonction de conversion ($G_{i1r}$),
- une première d'addition de la première valeur initiale souhaitée ($D_{1,eq}$) et de la première valeur correctrice ($\Delta D_1$), pour obtenir une première valeur candidate ($D_{1,c}$),
- un premier ajustement propre à ajuster la première valeur candidate ($D_{1,c}$) pour obtenir une première valeur à appliquer ($D_{1,a}$) comprise entre deux première valeurs extrêmes ($D_{1,min}$, $D_{1,max}$), la première valeur extrême la plus basse ($D_{1,min}$) étant le résultat de la première fonction de calcul (FC1) appliquée aux valeurs mesurées ($I_1$, $V_2$, $V_3$),
- une première application (72) de la première loi de commande ayant comme rapport cyclique la première valeur à appliquer ($D_{1,a}$), et

- pour chaque port de tension (22, 24) ayant une valeur de tension de consigne ($V_{3,ref}$), commande du deuxième commutateur ($T_{21}$, $T_{31}$) de référence du port de tension (22, 24) considéré, chaque étape de commande du deuxième commutateur ($T_{21}$, $T_{31}$) comprenant :

- un deuxième calcul d'une deuxième valeur initiale souhaitée ($\varphi_{3,eq}$), la deuxième valeur initiale souhaitée ($\varphi_{3,eq}$) étant une valeur souhaitée pour le déphasage ($\varphi_2$, $\varphi_3$) égale au résultat d'une deuxième fonction de calcul (FC2) appliquée à la première valeur initiale souhaitée ($D_{1,eq}$),
- une deuxième détermination de l'écart entre la valeur de tension mesurée ($V_2$, $V_3$) pour le port de tension (22, 24) considéré et la valeur de tension de consigne ($V_{3,ref}$) pour le port de tension considéré (22, 24), pour obtenir un écart de tension déterminé ($\Delta V_3$),
- une deuxième correction convertissant l'écart de tension déterminé ($\Delta V_3$) en une deuxième valeur correctrice ($\Delta\varphi_3$) pour le déphasage ($\varphi_2$, $\varphi_3$) par application d'une deuxième fonction de conversion ($G_{V3r}$),
- une deuxième addition de la deuxième valeur initiale souhaitée ($\varphi_{3,eq}$) et de la deuxième valeur correctrice ($\Delta\varphi_3$), pour obtenir une deuxième valeur candidate ($\varphi_{3,c}$),
- un deuxième ajustement propre à ajuster la deuxième valeur candidate ($\varphi_{3,c}$) pour obtenir une deuxième valeur à appliquer ($\varphi_{3,a}$) comprise entre deux deuxièmes valeurs extrêmes ($\varphi_{3,min}$, $\varphi_{3,max}$), la deuxième valeur extrême la plus basse ($\varphi_{3,min}$) étant le résultat de la deuxième fonction de calcul (FC2) appliquée à la première valeur initiale souhaitée ($D_{1,eq}$), et
- une deuxième application de la deuxième loi de commande ayant comme déphasage ($\varphi_2$, $\varphi_3$) la deuxième valeur à appliquer ($\varphi_{3,a}$).

**Patentansprüche**

1. Regelsystem (28) für einen Umrichter mit mehreren aktiven Brücken (10) mit Hybridstromversorgung, der Umrichter mit mehreren aktiven Brücken (10) umfassend:

- einen Eingangsstromanschluss (20), der eine H-Schalterbrücke (30) umfasst, für den ein Referenzschalter ($T_1$) definiert ist, wobei der Referenzschalter ($T_1$) als erster Referenzschalter ($T_1$) bezeichnet wird und durch ein erstes Steuergesetz ($LC_1$) gesteuert wird, wobei das erste Steuergesetz ($LC_1$) ein erstes Tastverhältnis ($D_1$) aufweist,
- mindestens einen Ausgangsspannungsanschluss (22, 24), umfassend eine H-Schalterbrücke (38, 40), für die ein Referenzschalter ($T_{21}$, $T_{31}$) definiert ist, wobei der Referenzschalter als zweiter Referenzschalter ($T_{21}$, $T_{31}$) und durch ein jeweiliges zweites Steuergesetz ($LC_2$, $LC_3$) gesteuert wird, wobei jedes zweite Steuergesetz ($LC_2$, $LC_3$) ein vordefiniertes zweites Tastverhältnis ($D_2$, $D_3$) und eine Phasenverschiebung ($\varphi_2$, $\varphi_3$) in Bezug auf das erste Steuergesetz ($LC_1$) aufweist,
- einen Transformator (26), der Wicklungen (42, 44, 46) aufweist, wobei jede Wicklung (42, 44, 46) über eine jeweilige Isolationsschnittstelle (48, 50, 52) mit einem Anschluss (20, 22, 24) verbunden ist,

wobei das Regelsystem (28) geeignet ist, um den Umrichter mit mehreren aktiven Brücken (10) auf einen Sollwert zu regeln, wobei der Sollwert einen Sollstromwert ($I_{1,ref}$) für den Strom des Stromanschlusses (20) und mindestens einen Sollspannungswert ($V_{3,ref}$) für den mindestens einen Spannungsanschluss (22, 24) umfasst, das Regelsystem (28) umfassend:

- eine Messwertmesseinheit, wobei die Messwerte den Strom ($I_1$) des Stromanschlusses (20) und die Spannung ($V_2$, $V_3$) von jedem Spannungsanschluss (22, 24) umfassen,
- eine erste Steuereinheit (56) des ersten Referenzschalters ($T_1$), die erste Steuereinheit (56) umfassend:

- eine erste Untereinheit (62) zum Berechnen eines ersten gewünschten Anfangswerts ($D_{1,eq}$), wobei der erste gewünschte Anfangswert ($D_{1,eq}$) ein gewünschter Wert für das erste Tastverhältnis ($D_1$) ist, der der Summe des Resultats einer ersten Berechnungsfunktion (FC1), die auf die Sollwerte ($I_{1,ref}$, $V_{1,ref}$) angewendet wird, und einer Sicherheitsmarge ($\varepsilon$) entspricht,

- eine erste Bestimmungsuntereinheit (64) der Abweichung zwischen dem gemessenen Stromwert ($I_1$) und dem Sollstromwert ($I_{1,ref}$), um eine bestimmte Stromabweichung ($\Delta I_1$) zu erlangen,

- eine erste Korrekturuntereinheit (66), die geeignet ist, um die bestimmte Stromabweichung ($\Delta I_1$) durch Anwenden einer ersten Umwandlungsfunktion ($G_{i1r}$) in einen ersten Korrekturwert für das erste Tastverhältnis ($D_1$) umzuwandeln,

- eine erste Additionsuntereinheit (68) des ersten gewünschten Anfangswerts ($D_{1,eq}$) und des ersten Korrekturwerts ($\Delta D_1$), um einen ersten Kandidatenwert ($D_{1,c}$) zu erlangen,

- eine erste Anpassungsuntereinheit (70), die geeignet ist, um den ersten Kandidatenwert ($D_{1,c}$) anzupassen, um einen ersten anzuwendenden Wert ($D_{1,a}$) zu erlangen, der zwischen zwei ersten Extremwerten ($D_{1,min}$, $D_{1,max}$) liegt, wobei der erste niedrigste Extremwert ($D_{1,min}$) das Resultat der ersten Berechnungsfunktion (FC1) ist, die auf die gemessenen Werte ($I_1$, $V_2$, $V_3$) angewandt wird,

- eine erste Anwendungsuntereinheit (72) des ersten Steuergesetzes, die als Tastverhältnis den ersten anzuwendenden Wert ($D_{1,app}$) aufweist, und

- für jeden Spannungsanschluss (22, 24), der einen Sollspannungswert ($V_{3,ref}$) aufweist, eine zweite Steuereinheit (58, 60) des zweiten Referenzschalters ($T_{21}$, $T_{31}$) des betrachteten Spannungsanschlusses (22, 24), jede zweite Steuereinheit (58, 60) umfassend:

- eine zweite Rechenuntereinheit (82) für einen zweiten gewünschten Anfangswert ($\varphi_{3,eq}$), wobei der zweite gewünschte Anfangswert ($\varphi_{3,eq}$) ein gewünschter Wert für die Phasenverschiebung ($\varphi_2$, $\varphi_3$) ist, der dem Resultat einer zweiten Berechnungsfunktion (FC2) entspricht, die auf den ersten gewünschten Anfangswert ($D_{1,eq}$) angewendet wird,

- eine zweite Bestimmungsuntereinheit (84) der Abweichung zwischen dem gemessenen Spannungswert ($V_2$, $V_3$) für den betrachteten Spannungsanschluss (22, 24) und dem Soll-Spannungswert ($\Delta V_{3,ref}$) für den betrachteten Spannungsanschluss (22, 24), um eine bestimmte Spannungsabweichung ($\Delta V_3$) zu erlangen,

- eine zweite Korrekturuntereinheit (86), die geeignet ist, um die bestimmte Spannungsabweichung ($\Delta V_3$) in einen zweiten Korrekturwert ($\Delta \varphi_3$) für die Phasenverschiebung ($\varphi_2$, $\varphi_3$) durch Anwendung einer zweiten Umwandlungsfunktion ($G_{V3r}$) umzuwandeln,

- eine zweite Additionsuntereinheit des zweiten gewünschten Anfangswerts ($\varphi_{3,eq}$) und des zweiten Korrekturwerts ($\Delta \varphi_3$), um einen zweiten Kandidatenwert ($\varphi_{3,c}$) zu erlangen,

- eine zweite Anpassungsuntereinheit (90), die geeignet ist, den zweiten Kandidatenwert ($\varphi_{3,c}$) anzupassen, um einen zweiten anzuwendenden Wert ($\varphi_{3,app}$) zu erlangen, der zwischen zwei zweiten Extremwerten ($\varphi_{3,min}$, $\varphi_{3,max}$) liegt, wobei der zweitniedrigste Extremwert ($\varphi_{3,min}$) das Resultat der zweiten Berechnungsfunktion (FC2) ist, die auf den ersten gewünschten Anfangswert ($D_{1,eq}$) angewandt wird, und

- eine zweite Anwendungsuntereinheit (92) des zweiten Steuergesetzes, die als Phasenverschiebung ($\varphi_2$, $\varphi_3$) den zweiten anzulegenden Wert ($\varphi_{3,app}$) aufweist.

2. Regelsystem nach Anspruch 1, wobei jede Anpassungsuntereinheit (70, 90) geeignet ist, um als anzuwendenden Wert ($D_{1,app}$, $\varphi_{3,app}$) den Kandidatenwert ($D_{1,c}$, $\varphi_{3,c,c}$) unverändert auszugeben, wenn der Kandidatenwert ($D_{1,c}$, $\varphi_{3,c,c}$) zwischen den zwei Extremwerten ($D_{1,min}$, $D_{1,max}$, $\varphi_{3,min}$, $\varphi_{3,max}$) liegt, und ansonsten den Extremwert auszugeben ($D_{1,min}$, $D_{1,max}$, $\varphi_{3,min}$, $\varphi_{3,max}$), der dem Kandidatenwert ($D_{1,c}$, $\varphi_{3,c}$) am nächsten ist.

3. Regelsystem nach Anspruch 1 oder 2, wobei der zweithöchste Extremwert ($\varphi_{3,max}$) das Resultat einer dritten Berechnungsfunktion (FC3) ist, die auf den ersten gewünschten Anfangswert ($D_{1,eq}$) angewendet wird.

4. Regelsystem nach Anspruch 3, wobei mindestens eine der zwei Berechnungsfunktionen (FC2 und FC3) eine affine Funktion ist.

5. Regelsystem nach einem der Ansprüche 1 bis 4, wobei jede Korrekturuntereinheit (66, 86) ein Proportional-Integral-Korrektor ist.

6. Regelsystem nach einem der Ansprüche 1 bis 5, wobei jede Umwandlungsfunktion ($G_{i1r}$, $G_{v3r}$) eine Funktion erster Ordnung ist.

7. Regelsystem nach einem der Ansprüche 1 bis 6, wobei jede H-Brücke (32, 38, 40) zwei Mittelpunkte (32M1, 32M2, 38M1, 38M2, 40M1, 40M2) aufweist, wobei jede Isolationsschnittstelle (48, 50, 52) zwei Leitungen umfasst, die jeweils einen Mittelpunkt (32M1, 32M2, 38M1, 38M2, 40M1, 40M2) mit einem Ende (42E1, 42E2, 44E1, 44E2, 46E1, 46E2) der assoziierten Wicklung (42, 44, 46) verbinden, und eine der zwei Leitungen dabei einen Widerstand ($R_1$, $R_2$, $R_3$) in Reihe mit einer Induktivität ($L_1$, $L_2$, $L_3$) aufweist.

8. Regelsystem nach Anspruch 7, wobei jede Wicklung (42, 44, 46) Windungen umfasst und die erste Umwandlungs-funktion ($G_{1ir}$) eine Verstärkung aufweist, die von den gemessenen Werten für die Spannungen ($V_2$, $V_3$), von dem gewünschten zweiten Anfangswert ($\varphi_{3,eq}$), von der Anzahl der Windungen jeder Wicklung (42, 44, 46) sowie von den Induktivitäten ($L_1$, $L_2$, $L_3$) der Isolationsschnittstellen (48, 50, 52) abhängt.

9. Regelsystem nach Anspruch 7 oder 8, bei dem jede Wicklung (42, 44, 46) Windungen aufweist und wobei die zweite Umwandlungsfunktion ($G_{v3r}$) eine Verstärkung aufweist, die von dem gemessenen Stromwert ($I_1$), dem ersten gewünschten Anfangswert ($D_{1,eq}$), dem zweiten gewünschten Anfangswert ($\varphi_{3,eq}$), der Anzahl der Windungen jeder Wicklung (42, 44, 46) und den Induktivitäten ($L_1$, $L_2$, $L_3$) der Isolationsschnittstellen (48, 50, 52) abhängt.

10. Regelsystem nach einem der Ansprüche 7 bis 9, wobei jede Wicklung (42, 44, 46) Windungen aufweist, wobei die erste Berechnungsfunktion (FC1) zusätzlich von der Anzahl der Windungen jeder Wicklung (42, 44, 46) und den Induktivitäten ($L_1$, $L_2$, $L_3$) der Isolationsschnittstellen (48, 50, 52) abhängt.

11. Regelsystem nach einem der Ansprüche 1 bis 10, wobei mindestens ein Ausgangsspannungsanschluss (22, 24) ein bidirektionaler Anschluss ist.

12. Regelsystem nach einem der Ansprüche 1 bis 11, wobei jede Bestimmungsuntereinheit (64, 84) ein Subtrahierer ist.

13. Regelsystem nach einem der Ansprüche 1 bis 12, in dem die Sicherheitsmarge ($\varepsilon$) ein vordefinierter Wert ist.

14. Umrichter mit mehreren aktiven Brücken (10) mit Hybridstromversorgung, der Umrichter mit mehreren aktiven Brücken (10) umfassend:

   - einen Eingangsstromanschluss (20), der eine H-Schalterbrücke (30) umfasst, für den ein Referenzschalter ($T_1$) definiert ist und mit einem Strom betrieben wird, wobei der Referenzschalter ($T_1$) als erster Referenzschalter ($T_1$) bezeichnet wird und durch ein erstes Steuergesetz ($LC_1$) gesteuert wird, wobei das erste Steuergesetz ($LC_1$) ein erstes Tastverhältnis ($D_1$) aufweist,
   - mindestens einen Ausgangsspannungsanschluss (22, 24), jeder Spannungsanschluss (22, 24) umfassend eine H-Schalterbrücke (38, 40), für die ein Referenzschalter ($T_{21}$, $T_{31}$) definiert ist, wobei jeder Referenzschalter als zweiter Referenzschalter ($T_{21}$, $T_{31}$) und durch ein jeweiliges zweites Steuergesetz ($LC_2$, $LC_3$) gesteuert wird, wobei jedes zweite Steuergesetz ($LC_2$, $LC_3$) ein vordefiniertes zweites Tastverhältnis ($D_2$, $D_3$) und eine Phasen-verschiebung ($\varphi_2$, $\varphi_3$) in Bezug auf das erste Steuergesetz ($LC_1$) aufweist,
   - einen Transformator (26), der Wicklungen (48, 50, 52) aufweist, wobei jede Wicklung (48, 50, 52) über eine jeweilige Isolationsschnittstelle (48, 50, 52) mit einem Anschluss (20, 22, 24) verbunden ist,
   - ein Regelsystem (28) nach einem der Ansprüche 1 bis 13.

15. Regelverfahren für einen Umrichter mit mehreren aktiven Brücken (10) mit Hybridstromversorgung, der Umrichter mit mehreren aktiven Brücken (10) umfassend:

   - einen Eingangsstromanschluss (20), der eine H-Schalterbrücke (30) umfasst, für den ein Referenzschalter ($T_1$) definiert ist, wobei der Referenzschalter ($T_1$) als erster Referenzschalter ($T_1$) bezeichnet wird und durch ein erstes Steuergesetz ($LC_1$) gesteuert wird, wobei das erste Steuergesetz ($LC_1$) ein erstes Tastverhältnis ($D_1$) aufweist,
   - mindestens einen Spannungsanschluss (22, 24), umfassend eine H-Schalterbrücke (38, 40), für die ein Referenzschalter ($T_{21}$, $T_{31}$) definiert ist, wobei der Referenzschalter als zweiter Referenzschalter ($T_{21}$, $T_{31}$) und durch ein jeweiliges zweites Steuergesetz ($LC_2$, $LC_3$) gesteuert wird, wobei jedes zweite Steuergesetz ($LC_2$, $LC_3$) ein vordefiniertes zweites Tastverhältnis ($D_2$, $D_3$) und eine Phasenverschiebung ($\varphi_2$, $\varphi_3$) in Bezug auf das erste Steuergesetz ($LC_1$) aufweist,
   - einen Transformator (26), der Wicklungen (42, 44, 46) aufweist, wobei jede Wicklung (42, 44, 46) über eine jeweilige Isolationsschnittstelle (48, 50, 52) mit einem Anschluss (20, 22, 24) verbunden ist,

wobei das Verfahren geeignet ist, um den Umrichter mit mehreren aktiven Brücken (10) auf einen Sollwert zu regeln, der Sollwert umfassend einen Sollstromwert ($I_{1,ref}$) für den Strom des Stromanschlusses (20) und mindestens einen Sollspannungswert ($V_{3,ref}$) für den mindestens einen Spannungsanschluss (22, 24), das Verfahren umfassend die folgenden Schritte:

- Messen von Messwerten, die Messwerte umfassend den Strom des Stromanschlusses (20) und die Spannung ($V_2$, $V_3$) von jedem Spannungsanschluss (22, 24),
- Steuern des ersten Referenzschalters ($T_1$), der Steuerschritt umfassend:

- eine erste Berechnung eines ersten gewünschten Anfangswerts ($D_{1,eq}$), wobei der erste gewünschte Anfangswert ($D_{1,eq}$) ein gewünschter Wert für das erste Tastverhältnis ($D_1$) ist, der der Summe des Resultats einer ersten Berechnungsfunktion (FC1), die auf die Sollwerte ($I_{1,ref}$, $V_{1,ref}$) angewendet wird, und einer Sicherheitsmarge ($\varepsilon$) entspricht,
- eine erste Bestimmung der Abweichung zwischen dem gemessenen Stromwert ($I_1$) und dem Sollstromwert ($I_{1,ref}$), um eine bestimmte Stromabweichung ($\Delta I_1$) zu erlangen,
- eine erste Korrektur, die die bestimmte Stromabweichung ($\Delta I_1$) durch Anwenden einer ersten Umwandlungsfunktion ($G_{i1r}$) in einen ersten Korrekturwert ($\Delta D_1$) für das erste Tastverhältnis ($D_1$) umwandelt,
- eine erste Addition des ersten gewünschten Anfangswerts ($D_{1,eq}$) und des ersten Korrekturwerts ($\Delta D_1$), um einen ersten Kandidatenwert ($D_{1,c}$) zu erlangen,
- eine erste Anpassung, die geeignet ist, um den ersten Kandidatenwert ($D_{1,c}$) anzupassen, um einen ersten anzuwendenden Wert ($D_{1,a}$) zu erlangen, der zwischen zwei ersten Extremwerten ($D_{1,min}$, $D_{1,max}$) liegt, wobei der erste niedrigste Extremwert ($D_{1,min}$) das Resultat der ersten Berechnungsfunktion (FC1) ist, die auf die gemessenen Werte ($I_1$, $V_2$, $V_3$) angewandt wird,
- eine erste Anwendung (72) des ersten Steuergesetzes, die als Tastverhältnis den ersten anzuwendenden Wert ($D_{1,a}$) aufweist, und

- für jeden Spannungsanschluss (22, 24), der einen Sollspannungswert ($V_{3,ref}$) aufweist, Steuern des zweiten Referenzschalters ($T_{21}$, $T_{31}$) des betrachteten Spannungsanschlusses (22, 24), jeder Schritt des Steuerns des zweiten Schalters ($T_{21}$, $T_{31}$) umfassend:

- eine zweite Berechnung eines zweiten gewünschten Anfangswerts ($\varphi_{3,eq}$), wobei der zweite gewünschte Anfangswert ($\varphi_{3,eq}$) ein gewünschter Wert für die Phasenverschiebung ($\varphi_2$, $\varphi_3$) ist, der dem Resultat einer zweiten Berechnungsfunktion (FC2) entspricht, die auf den ersten gewünschten Anfangswert ($D_{1,eq}$) angewendet wird,
- eine zweite Bestimmung der Abweichung zwischen dem gemessenen Spannungswert ($V_2$, $V_3$) für den betrachteten Spannungsanschluss (22, 24) und dem Soll-Spannungswert ($V_{3,ref}$) für den betrachteten Spannungsanschluss (22, 24), um eine bestimmte Spannungsabweichung ($\Delta V_3$) zu erlangen,
- eine zweite Korrektur, die die bestimmte Spannungsabweichung ($\Delta V_3$) in einen zweiten Korrekturwert ($\Delta \varphi_3$) für die Phasenverschiebung ($\varphi_2$, $\varphi_3$) durch Anwendung einer zweiten Umwandlungsfunktion ($G_{v3r}$) umwandelt,
- eine zweite Addition des zweiten gewünschten Anfangswerts ($\varphi_{3,eq}$) und des zweiten Korrekturwerts ($\Delta \varphi_3$), um einen zweiten Kandidatenwert ($\varphi_{3,c}$) zu erlangen,
- eine zweite Anpassung, die geeignet ist, um den zweiten Kandidatenwert ($\varphi_{3,c}$) anzupassen, um einen zweiten anzuwendenden Wert ($\varphi_{3,a}$) zu erlangen, der zwischen zwei zweiten Extremwerten ($\varphi_{3,min}$, ($\varphi_{3,max}$) liegt, wobei der zweitniedrigste Extremwert ($\varphi_{3,min}$) das Resultat der zweiten Berechnungsfunktion (FC2) ist, die auf den ersten gewünschten Anfangswert ($D_{1,eq}$) angewandt wird, und
- eine zweite Anwendung der zweiten Steuerregel, die als Phasenverschiebung ($\varphi_2$, $\varphi_3$) den zweiten anzuwendenden Wert ($\varphi_{3,a}$) aufweist.

**Claims**

1. A regulation system (28) for a multi-active bridge converter (10) with hybrid supply, the multiple active bridge converter (10) comprising:

- an input current port (20) comprising an H-shape switch bridge (30) for which a reference switch ($T_1$) is defined, the reference switch ($T_1$) being called the first reference switch ($T_1$) and being controlled by a first control law ($LC_1$), the first control law ($LC_1$) having a first duty cycle ($D_1$),

- at least one output voltage port (22, 24) comprising an H-shape switch bridge (38, 40) for which a reference switch ($T_{21}$, $T_{31}$) is defined, the reference switch being called the second reference switch ($T_{21}$, $T_{31}$) and being controlled by a respective second control law ($LC_2$, $LC_3$), each second control law ($LC_2$, $LC_3$) having a second predefined duty cycle ($D_2$, $D_3$) and a phase shift ($\varphi_2$, $\varphi_3$) with respect to the first control law ($LC_1$),
- a transformer (26) having windings (42, 44, 46), each winding (42, 44, 46) being connected to a port (20, 22, 24) by a respective isolation interface (48, 50, 52),

the regulation system (28) being apt to regulate the active multi-bridge active (10) to a setpoint, the setpoint comprising a setpoint current value ($I_{1,ref}$) for the current of the current port (20) and at least one setpoint voltage value ($V_{3,ref}$) for the at least one voltage port (22, 24), the regulation system (28) comprising:

- a measuring unit for measured values, the measured values comprising the current ($I_1$) of the current port (20) and the voltage ($V_2$, $V_3$) of each voltage port (22, 24),
- a first control unit (56) of the first reference switch ($T_1$), the first control unit (56) comprising:

- a first subunit (62) for calculating a first desired initial value ($D_{1,eq}$), the first desired initial value ($D_{1,eq}$) being a desired value for the first duty cycle ($D_1$) equal to the sum of the result of a first calculation function (FC1) applied to the set values ($I_{1,ref}$, $V_{3,ref}$) and a safety margin ($\varepsilon$),
- a first subunit (64) for determining the difference between the measured current value ($I_1$) and the setpoint current value ($I_{1,ref}$), in order to obtain a determined difference of current ($\Delta I_1$),
- a first correction subunit (66) apt to convert the determined difference of current ($\Delta I_1$) into a first corrective value ($\Delta D_1$) for the first duty cycle ($D_1$) by applying a first conversion function ($G_{i1r}$),
- a first addition subunit (68) for adding the first desired initial value ($D_{1,eq}$) and the first corrective value ($\Delta D_1$), so as to obtain a first candidate value ($D_{1,c}$),
- a first adjustment subunit (70) suitable for adjusting the first candidate value ($D_{1,c}$) so as to obtain a first value to be applied ($D_{1,app}$), comprised between two first extreme values ($D_{1,min}$, $D_{1,max}$), the first lowest extreme value ($D_{1,min}$) being the result of the first calculation function (FC1) applied to the measured values ($I_1$, $V_2$, $V_3$),
- a first application subunit (72) for applying the first control law having as duty cycle the first value to be applied ($D_{1,app}$), and

- for each voltage port (22, 24) having a desired voltage value ($V_{3,ref}$), a second control unit (58, 60) of the second reference switch ($T_{21}$, $T_{31}$) of the voltage port (22, 24) considered, each second control unit (58, 60) comprising:

- a second calculation subunit (82) of a second desired initial value ($\varphi_{3,eq}$), the second desired initial value ($\varphi_{3,eq}$) being a desired value for the phase shift ($\varphi_2$, $\varphi_3$) equal to the result of a second calculation function (FC2) applied to the first desired initial value ($D_{1,eq}$),
- a second determination subunit (84) for determining the difference between the measured voltage value ($V_2$, $V_3$) for the voltage port (22, 24) considered and the setpoint voltage value ($V_{3,ref}$) for the voltage port (22, 24) considered, in order to obtain a determined difference of voltage ($\Delta V_3$),
- a second correction subunit (86) apt to convert the determined difference of voltage ($\Delta V_3$) into a second corrective value ($\Delta\varphi_3$) for the phase shift ($\varphi_2$, $\varphi_3$) by applying a second conversion function ($G_{v3r}$),
- a second addition subunit (88) for adding the second desired initial value ($\varphi_{3,eq}$) and the second corrective value ($\Delta\varphi_3$), so as to obtain a second candidate value ($\varphi_{3,c}$),
- a second adjustment subunit (90) suitable for adjusting the second candidate value ($\varphi_{3,c}$) so as to obtain a second value to be applied ($\varphi_{3,app}$) between two second extreme values ($\varphi_{3,min}$, $\varphi_{3,max}$), the second lowest extreme value ($\varphi_{3,min}$) being the result of the second calculation function (FC2) applied to the first desired initial value ($D_{1,eq}$), and
- a second application subunit (92) for applying the second control law having as phase shift ($\varphi_2$, $\varphi_3$) the second value to be applied ($\varphi_{3,app}$).

2. The regulation system according to claim 1, wherein each adjustment subunit (80, 90) is apt to give as the value to be applied ($D_{1,app}$, $\varphi_{3,app}$), the candidate value ($D_{1,c}$, $\varphi_{3,c}$) unchanged when the candidate value ($D_{1,c}$, $\varphi_{3c}$) is comprised between the two extreme values ($D_{1,min}$, $D_{1,max}$, $\varphi_{3,min}$, $\varphi_{3,max}$) and otherwise the extreme value ($D_{1,min}$, $D_{1,max}$, $\varphi_{3,min}$, $\varphi_{3,max}$) closest to the candidate value ($D_{1,c}$, $\varphi_{3,c}$).

3. The regulation system according to claim 1 or 2, wherein the second highest extreme value ($\varphi_{3,max}$) is the result of a third calculation function (FC3) applied to the desired first initial value ($D_{1,eq}$).

4. The regulation system according to claim 3, wherein at least one of the second calculation function (FC2) and the third calculation function (FC3) is an affine function.

5. The regulation system according to any one of claims 1 to 4, wherein each correction subunit (66, 86) is a proportional integral corrector.

6. The regulation system according to any one of claims 1 to 5, wherein each conversion function ($G_{i1_r}$, $G_{v3_r}$) is a first order function.

7. The regulation system according to any one of claims 1 to 6, wherein each H-bridge (32, 38, 40) has two midpoints (32M1, 32M2, 38M1, 38M2, 40M1, 40M2) each isolation interface (48, 50, 52) including two lines connecting a respective midpoint (32M1, 32M2, 38M1, 38M2, 40M1, 40M2) with one end (42E1, 42E2, 44E1, 44E2, 46E1, 46E2) of the associated winding (42, 44, 46), one of the two lines including a resistor ($R_1$, $R_2$, $R_3$) in series with an inductance ($L_1$, $L_2$, $L_3$).

8. The regulation system according to claim 7, wherein each winding (42, 44, 46) has turns, the first conversion function ($G_{i1_r}$) having a gain dependent on the measured values for the voltages ($V_2$, $V_3$), on the second desired initial value ($\varphi_{3,eq}$), on the number of turns of each winding (42, 44, 46) and on the inductances ($L_1$, $L_2$, $L_3$) of the isolation interfaces (48, 50, 52).

9. The regulation system according to claim 7 or 8, wherein each winding (42, 44, 46) has turns, the second conversion function ($G_{v3_r}$) having a gain dependent on the measured current value ($I_1$), on the desired first initial value ($D_{1,eq}$), on the second desired initial value ($\varphi_{3,eq}$), on the number of turns of each winding (42, 44, 46) and on the inductances ($L_1$, $L_2$, $L_3$) of the isolation interfaces (48, 50, 52).

10. The regulation system according to any one of claims 7 to 9, wherein each winding (42, 44, 46) includes turns, the first calculation function (FC1) further depending on the number of turns of each winding (42, 44, 46) and on the inductances ($L_1$, $L_2$, $L_3$) of the isolation interfaces (48, 50, 52).

11. The regulation system according to any one of claims 1 to 10, wherein at least an input voltage port (22, 24) is a bi-directional port.

12. The regulation system according to any one of claims 1 to 11, wherein each determination subunit (64; 84) is a subtractor.

13. The regulation system according to any one of claims 1 to 12, wherein the safety margin ($\varepsilon$) is a predefined value.

14. A multi-active bridge converter (10) with hybrid supply, the multi-active bridge converter (10) comprising:

    - an input current port (20) comprising an H-shape switch bridge (30) for which a reference switch ($T_1$) is defined and operates at a current, the reference switch ($T_1$) being called the first reference switch ($T_1$) and being controlled by a first control law ($LC_1$), the first control law ($LC_1$) having a first duty cycle ($D_1$),
    - at least one output voltage port (22, 24), each voltage port (22, 24) comprising an H-shape switch bridge (38, 40) for which a reference switch ($T_{21}$, $T_{31}$) is defined, each reference switch being called the second reference switch ($T_{21}$, $T_{31}$) and being controlled by a respective second control law ($LC_2$, $LC_3$), each second control law ($LC_2$, $LC_3$) having a predefined second duty cycle ($D_2$, $D_3$) and a phase shift ($\varphi_2$, $\varphi_3$) with respect to the first control law ($LC_1$),
    - a transformer (26) having windings (48, 50, 52), each winding (48, 50, 52) being connected to a port (20, 22, 24) by a respective isolation interface (48, 50, 52), and
    - a regulation system (28) according to any of claims 1 to 13.

15. A regulation method for a multi-active bridge converter (10) with hybrid supply, the multi-active bridge converter (10) comprising:

    - an input current port (20) comprising an H-shape switch bridge (30) for which a reference switch ($T_1$) is defined, the reference switch ($T_1$) being called the first reference switch ($T_1$) and being controlled by a first control law ($LC_1$), the first control law ($LC_1$) having a first duty cycle ($D_1$),
    - at least one output voltage port (22, 24) comprising an H-shape switch bridge (38, 40) for which a reference switch ($T_{21}$, $T_{31}$) is defined, the reference switch being called the second reference switch ($T_{21}$, $T_{31}$) and being

controlled by a respective second control law ($LC_2$, $LC_3$), each second control law ($LC_2$, $LC_3$) having a second predefined duty ratio ($D_2$, $D_3$) and a phase shift ($\varphi_2$, $\varphi_3$) with respect to the first control law ($LC_1$),
- a transformer (26) having windings (42, 44, 46), each winding (42, 44, 46) being connected to a port (20, 22, 24) by a respective isolation interface (48, 50, 52),

the method being apt to regulate the multiple active bridge converter (10) to a setpoint, the setpoint comprising a setpoint current value ($I_{1,ref}$) for the current of the current port (20) and at least one setpoint voltage value ($V_{3,ref}$) for the at least one voltage port (22, 24), the method comprising the steps of:

- measurement of measured values, the measured values comprising the current ($I_1$) of the current port (20) and the voltage ($V_2$, $V_3$) of each voltage port (22, 24),
- control of the first reference switch ($T_1$), the control step comprising:

- a first calculation of a first desired initial value ($D_{1,eq}$), the first desired initial value ($D_{1,eq}$) being a desired value for the first duty cycle ($D_1$) equal to the sum of the result of a first calculation function (FC1) applied to the setpoint values ($I_{1,ref}$, $V_{3,ref}$) and of a safety margin ($\varepsilon$),
- a first determination of the difference between the measured current value ($I_1$) and the setpoint current value ($I_{1,ref}$), so as to obtain a determined difference of current ($\Delta I_1$),
- a first correction converting the determined current deviation ($\Delta I_1$) into a first corrective value ($\Delta D_1$) for the first duty cycle ($D_1$) by applying a first conversion function ($G_{i1r}$),
- a first addition of the first desired initial value ($D_{1,eq}$) and of the first corrective value ($\Delta D_1$), so as to obtain a first candidate value ($D_{1,c}$),
- a first adjustment suitable for adjusting the first candidate value ($D_{1,c}$) so as to obtain a first value to be applied ($D_{1,app}$) between two first extreme values ($D_{1,min}$, $D_{1,max}$), the first lowest extreme value ($D_{1,min}$) being the result of the first calculation function (FC1) applied to the measured values ($I_1$, $V_2$, $V_3$),
- a first application ( 72 ) of the first control law having as duty cycle the first value to be applied ($D_{1,app}$), and

- For each voltage port (22, 24) having a set voltage value ($V_{3,ref}$), controlling the second reference switch ($T_{21}$, $T_{31}$) of the voltage port (22, 24) considered, each step of controlling the second switch ($T_{21}$, $T_{31}$) comprising:

- a second calculation of a second desired initial value ($\varphi_{3,eq}$), the second desired initial value ($\varphi_{3,eq}$) being a desired value for the phase shift ($\varphi_2$, $\varphi_3$) equal to the result of a second calculation function (FC2) applied to the first desired initial value ($D_{1,eq}$),
- a second determination of the difference between the measured voltage value ($V_2$, $V_3$) for the voltage port (22, 24) considered and the setpoint voltage value ($V_{3,ref}$) for the voltage port (22, 24) considered, in order to obtain a determined difference of voltage ($\Delta V_3$),
- a second correction converting the determined difference of voltage ($\Delta V_3$) into a second corrective value ($\Delta \varphi_3$) for the phase shift ($\varphi_2$, $\varphi_3$) by applying a second conversion function ($G_{v3r}$),
- a second addition of the second desired initial value ($\varphi_{3,eq}$) and of the second corrective value ($\Delta \varphi_3$), so as to obtain a second candidate value ($\varphi_{3,c}$),
- a second adjustment suitable for adjusting the second candidate value ($\varphi_{3,c}$) so as to obtain a second value to be applied ($\varphi_{3,app}$) between two second extreme values ($\varphi_{3,min}$, $\varphi_{3,max}$), the second lowest extreme value ($\varphi_{3,min}$) being the result of the second calculation function (FC2) applied to the first desired initial value ($D_{1,eq}$), and
- a second application of the second control law having as phase shift ($\varphi_2$, $\varphi_3$) the second value to be applied ($\varphi_{3,app}$).

FIG.1

FIG.2

EP 4 462 667 B1

$$\underline{\text{FIG.3}}$$

$$\underline{\text{FIG.4}}$$

FIG.5

FIG.6

41

FIG.7

FIG.8

FIG.9

FIG.10

**EP 4 462 667 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008212340 A1